(19) Europäisches Patentamt
European Patent Office
Office européen des brevets

(11) Veröffentlichungsnummer: **0 150 790 B1**

# (12) EUROPÄISCHE PATENTSCHRIFT

(45) Veröffentlichungstag der Patentschrift: **01.03.89**

(51) Int. Cl.⁴: **C 08 G 18/80**

(21) Anmeldenummer: **85100575.1**

(22) Anmeldetag: **21.01.85**

(54) **Verfahren zur Herstellung von stabilisierten Polyisocyanaten, stabilisierte Isocyanate retardierter Reaktivität und ihre Verwendung zur Polyurethanherstellung.**

(30) Priorität: **02.02.84 DE 3403500**

(43) Veröffentlichungstag der Anmeldung: **07.08.85 Patentblatt 85/32**

(45) Bekanntmachung des Hinweises auf die Patenterteilung: **01.03.89 Patentblatt 89/9**

(84) Benannte Vertragsstaaten: **AT BE CH DE FR GB IT LI NL SE**

(56) Entgegenhaltungen:
**EP-A- 0 001 468**
**EP-A- 0 039 834**
**EP-A- 0 062 780**
**EP-A- 0 103 323**
**DE-A- 2 722 514**
**DE-A- 2 946 085**
**US-A- 3 864 313**

(73) Patentinhaber: **BAYER AG, Konzernverwaltung RP Patentabteilung, D-5090 Leverkusen 1 Bayerwerk (DE)**

(72) Erfinder: **Grögler, Gerhard, Dr., von-Diergardt-Strasse 46, D-5090 Leverkusen (DE)**
Erfinder: **Hess, Heinrich, Dr., Körnerstrasse 5, D-5090 Leverkusen (DE)**
Erfinder: **Kopp, Richard, Dr., Wolfskaul 12, D-5000 Köln 80 (DE)**

**EP 0 150 790 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von feinteiligen, durch eine Oberflächenhülle in ihrer Reaktivität retardierten («stabilisierten») Polyisocyanaten durch Umsetzung fester, feinteiliger Polyisocyanate in einem flüssigen Medium mit offenkettigen, mono- oder bicyclischen Verbindungen mit mindestens einer Amidin- und/oder Guanidingruppe

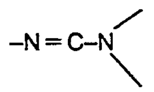 und/oder 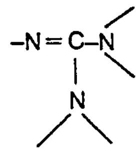

(I) (II)

welche keine gegenüber Isocyanaten bei Raumtemperatur reaktiven Wasserstoffatome besitzen. Die Umsetzung kann dabei direkt in Polyolen und/oder aromatischen Polyaminen, gegebenenfalls unter Zusatz von Weichmachern, Lösungsmitteln und/oder Wasser, zu einer lagerstabilen Suspension von Polyaddukt-umhüllten Polyisocyanaten erfolgen. Die oberflächenmodifizierten Polyisocyanate können, insbesondere, wenn als flüssiges Medium Wasser, flüchtige Lösungsmittel oder Weichmacher verwendet wurden, auch zunächst isoliert und danach in beliebigen Polyolen und/oder Polyaminen suspendiert werden.

Erfindungsgegenstand sind auch die so erhältlichen oberflächenmodifizierten Polyisocyanate mit retardierter Reaktivität, gegebenenfalls suspendiert in Polyolen und/oder aromatischen Polyaminen.

Weiterer Erfindungsgegenstand ist die Verwendung der erfindungsgemäßen, oberflächenmodifizierten Polyisocyanate als Reaktionskomponente bei Polyurethansynthesen, insbesondere in Form von langzeitlagerstabilen, jedoch thermisch härtbaren Einkomponenten-Polyurethan-Reaktivsystemen.

Bisher sind nur wenige Veröffentlichungen zur Oberflächenmodifizierung von bei Raumtemperatur festen Polyisocyanaten bekannt.

In der DE-A-2 557 407 wird ein Verfahren beschrieben, bei dem die Lösung eines Polyisocyanates in einer bestimmten Menge eines niedrig siedenden Lösungsmittels in einem Reaktionsraum mit einem gasförmigen Di- und/oder Polyamin gedüst wird, wobei durch die Reaktion des Polyisocyanates mit dem Amin und durch die Verdampfung des Lösungsmittels Polyurethanpolyharnstoff-Hohlperlen erhalten werden, die vorzugsweise als Füllstoffe eingesetzt werden. Die Reaktion wird im allgemeinen so geführt, daß die NCO-Gruppen mit dem Amin und gegebenenfalls weiteren zugesetzten NCO-reaktiven Komponenten möglichst vollständig abreagieren.

In der US-A-4 070 346 wird die Herstellung feinpulvriger Teilchen mit Größen von 1 bis 100 µm durch Einbringen flüssiger oder geschmolzener Polyisocyanat- oder NCO-Prepolymer-Tröpfchen in einen Dampfraum mit flüchtigen Di- oder Polyaminen beschrieben, wobei sie nach schneller Entfernung aus dem Reaktor noch freie NCO-Gruppen im Inneren der Partikel unter einer festen Polyharnstoffhülle enthalten. Es bleiben Partikel mit ca. 50 bis 60% NCO-Restgehalt im Inneren über. Es können auch Mischungen von Polyisocyanaten oder NCO-Prepolymeren mit Polyolen (z. B. Butandiol-1,4) in der Diamin-Atmosphäre zerstäubt und zu Partikeln abreagiert werden.

Die US-A-3 409 461 beschreibt die Umhüllung von Polyisocyanaten mit einer Schutzsubstanz, vorzugsweise einem Polymeren. Hierzu wird das Isocyanat in eine Lösung des Polymers in einem niedrig siedenden, das Isocyanat praktisch nicht lösenden Lösungsmittel dispergiert und die Dispersion sprühgetrocknet. Vorzugsweise wird fein gemahlenes (1 bis 10 µm Teilchengröße) Naphthylen-1,5-diisocyanat mit einer 1- bis 2,5-%igen Lösung von Polystyrol, Polyvinylbutylether, chloriertem Kautschuk und ähnlichen in Tetrachlormethan sprühgetrocknet. Es werden freifließende Pulver mit einer Teilchengröße von ca. 1 bis 50 µm erhalten. Diese werden vorzugsweise zur Verbesserung der Haftung von Polyesterprodukten (Geweben, Fasern, Folien) an Kautschukelastomeren eingesetzt. Bei diesem Verfahren zur Umhüllung von Isocyanaten mittels zugesetzter Polymerer aus Lösung müssen erhebliche Mengen von teilweise giftigen Lösungsmitteln eingesetzt und wieder entfernt werden. Besonders nachteilig im Verfahren ist der erhebliche Anteil des Hüllenmaterials (9 bis 91 Gew.-%, bei den Beispielen 50 Gew.-%) an dem Gesamtgewicht des umhüllen Isocyanats. Dadurch würde bei der Herstellung von qualitativ hochwertigen Polyurethanen ein zu hoher Anteil an störender Fremdsubstanz eingebracht werden.

In der US-A-3 963 680 wird eine Fortentwicklung des in der US-A-3 860 565 beschriebenen Verkapselungsverfahrens angegeben, indem man härtbare Isocyanatmischungen durch Mikroverkapselung von bis zu 50 Gew.-% an flüssigen Trimerisierungskatalysatoren, welche 1 bis 25 Gew.-% (bezogen auf Katalysatoren) an primären oder sekundären organischen Polyaminen enthalten, unter Ausbildung von Polyharnstoff-Kapselwänden herstellt. Erst bei hohen Temperaturen werden die Katalysatoren durch Zerstörung der Kapselwände in den Isocyanaten wirksam.

Weitere Literatur ist in der US-A-3 963 680 aufgeführt, insbesondere wird auf die Zusammenfassung von Gutcho; Noyes Data Corporation, Park Ridge, N.J./USA (1972): «Capsule Technology and Microencapsulation» verwiesen.

In der DE-A-1 570 548 wird ein längere Zeit lagerfähiges Einkomponentensystem beschrieben, welches aus einem Gemisch von 1 Mol eines Polyesters, Polyethers oder Polythioethers, mindestens 1,5 Mol eines Uretdiongruppen enthaltenden festen Isocyanates mit einem Schmelzpunkt $\geqq$ 100 °C und mindestens 0,3 Mol eines festen Kettenverlängerungsmittels mit OH- und/oder $NH_2$-Gruppen mit einem Schmelzpunkt $\geqq$ 80 °C besteht. Dabei müssen mindestens 80% der festen Gemischbestandteile mit einer Teilchengröße $\leqq$30 µm vorliegen. Die Lagerbeständigkeit beträgt bei Raumtemperatur einige Tage bis einige Wochen, bei 50 °C nur einige Stunden. Ein Nachteil des Verfahrens liegt darin, daß von drei Reaktionspartnern mindestens zwei in fester Form vorliegen müssen, um die nötige Lagerstabilität zu gewährleisten. Das führt dazu, daß im allgemeinen sehr hochviskose Gemische erhalten werden, deren Viskosität langsam weiter ansteigt, weil keine der Verbindungen in ihrer Reaktivität ausreichend modifiziert wurde. Die aus der ständigen Viskositätszunahme ersichtliche Reaktion von Diolen an der Oberfläche der festen Diisocyanat-Teilchen erfolgt unkontrolliert und praktisch zu langsam und ergibt keine ausreichende Retardierung der Reaktivität der Polyisocyanate unter Selbststabilisierung des Systems. Auch dürften beim Aushärten der Mischung wegen der hohen Anteile an festen Bestandteilen Inhomogenitäten im ausgeheizten Produkt zu erwarten sein. Auch ist die Verarbeitung der hochviskosen bis festen Gemische schwieriger, weil diese, im Gegensatz zu flüssigen Gemischen, zuerst einmal durch Temperaturerhöhung oder Druckanwendung in einen verformbaren Zustand gebracht werden müssen.

Beim Verweilen von hochschmelzenden Polyisocyanaten in Gemischen aus höher- und niedermolekularen Polyolen tritt eine ständige und relativ schnelle Weiterreaktion unter starker Viskositätserhöhung ein, d. h. die Oberflächenreaktion an den festen Polyisocyanatteilchen bildet keine zur Retardierung ausreichende, d. h. hinreichend stabilisierende Hülle um das Polyisocyanat.

In der GB-A-1 134 285 wird ein Verfahren zur Herstellung von dimeren Diisocyanaten in einem wäßrigen Reaktionsmedium beschrieben. Derartig hergestellte Diisocyanat-Dimere, z. B. dimeres Toluylendiisocyanat, reagieren nach den Angaben in dieser Patentschrift bei Raumtemperatur nicht mit polyfunktionellen Verbindungen mit reaktiven Wasserstoffatomen, z. B. Mischungen mit Polyolen können jedoch thermisch zu Polyurethanen vernetzt werden. Möglicherweise wird die Stabilität durch eine eingetretene, langsame Oberflächenreaktion von Isocyanaten mit Wasser zu Polyharnstoffen hervorgerufen. In der wäßrigen Suspension des dimeren Diisocyanats können nach den Angaben in der Patentschrift auch primäre oder sekundäre Diamine, z. B. Ethylendiamin, oder Polyamine, z. B. Triethylentetramin, vorzugsweise in Mengen von 100 bis 60% der vorhandenen NCO-Gruppen, verwendet werden. Die Vernetzung mit derartig hergestellten Diisocyanatdimeren wird im allgemeinen bei hohen Temperaturen, z. B. 150 bis 200 °C, durch Spaltung des Uretdionrings herbeigeführt.

In der DE-A-3 112 054 wird schließlich ein Verfahren zur Herstellung von lagerstabilen, hitzehärtbaren Stoffmischungen aus Polyisocyanat und Polyol beschrieben. Hierbei liegt das Polyisocyanat in Form von festen Teilchen im Polyol vor, wobei an der Oberfläche der Polyisocyanatteilchen 0,5 bis 20 Äquivalent-% der insgesamt vorhandenen Isocyanatgruppen mittels Verbindungen mit reaktiven H-Atomen, z. B. Mono- oder Polyolen, bevorzugt primären oder sekundären Mono- oder Polyaminen oder Wasser umgesetzt worden sind. Die Härtung solcher Mischungen muß bei einer relativ hohen Temperatur (165 °C) erfolgen.

Aus der Literatur sind eine Vielzahl von blokkierten Polyisocyanaten bekannt, bei denen alle NCO-Gruppen mit Blockierungsmitteln wie z. B. Caprolactam oder Malonestern umgesetzt worden sind. Die Spaltungstemperaturen liegen zumeist sehr hoch, z. B. $\geq$ 150 °C. Es wurden als Blockierungsmittel auch bereits Amidine, welche mindestens eine gegenüber Isocyanat reaktive Gruppe enthalten, (z. B. 2-Phenyl-imidazolin) beschrieben (DE-A-2 729 704 bzw. DE-A-2 946 085). Solche blockierten Polyisocyanate zeigen zwar eine etwas reduzierte Spalttemperatur ($\geq$ 120 °C), doch muß auch hier bei der Polyurethanherstellung eine große Menge an Blockierungsmitteln abgespalten werden.

Aufgabe der vorliegenden Erfindung war es, lagerstabile Einkomponenten-PU-Reaktivsysteme zur Verfügung zu stellen, welche ein Polyisocyanat enthalten, dessen NCO-Gruppen nur zum Teil und reversibel blockiert sind, so daß alle NCO-Gruppen für die spätere Polyadditionsreaktion zur Verfügung stehen. Die Reaktivsysteme sollen trotz hoher Lagerbeständigkeit bei Raumtemperatur schon durch relativ geringe Temperaturerhöhung aktivierbar sein und dann rasch aushärten. Diese Aufgabe wird durch das erfindungsgemäße Verfahren gelöst.

Gegenstand der Erfindung ist ein Verfahren zur Herstellung von feinteiligen, durch eine Oberflächenhülle in ihrer Reaktivität retardierten festen Polyisocyanaten, dadurch gekennzeichnet, daß man ein festes, feinteiliges Polyisocyanat mit einem Schmelzpunkt oberhalb 40 °C und einer Teilchengröße von 0,5 bis 200 µm mit einer offenkettigen, monocyclischen oder bicyclischen Verbindung, welche mindestens eine Amidin- und/oder Guanidingruppierung enthält und welche keine gegenüber Isocyanatgruppen bei Raumtemperatur reaktiven H-Atome besitzt, in einer Menge von 0,001 bis 0,25 Äquivalent Amidin- und Guanidingruppen pro Äquivalent NCO in einem flüssigen Medium, ausgewählt aus Mono- und/oder Polyolen und/oder aromatischen Polyaminen und/oder Weichmachern und/oder Wasser und/oder unpolaren oder wenig polaren Lösungsmitteln, wobei das flüssige Medium kein Lösungsmittel für das feste Polyisocyanat ist, bei Temperaturen unterhalb des Schmelzpunktes des Polyisocyanats umsetzt, gegebenenfalls das so mit einer Oberflächenhülle versehene Polyisocyanat aus den als flüssiges Medium verwendeten Monoalkoholen, Weichmachern, Wasser und/oder Lösungsmitteln isoliert und gegebenenfalls nachträglich in Polyolen und/oder Polyaminen suspendiert.

Die beim erfindungsgemäßen Verfahren gebildete Oberflächenumhüllung besteht im wesentlichen aus Mono- oder Polyadditionsprodukten – ungeklärter Struktur – von Isocyanaten und Amidin- bzw. Guanidin-Verbindungen. Es ist bekannt, daß bei flüssigen Polyisocyanaten, in Lösung oder in Schmelze, Amidine und Guanidine stark beschleunigend auf Reaktionen der NCO-Gruppe mit aktiven Wasserstoffatomen wirken. Es war daher völlig unerwartet, daß an der Oberfläche fester Polyisocyanate eine Adduktbildung erfolgt, welche eine weitere Reaktion der Polyisocyanate verhindert. Während bei der in der DE-A-3 112 054 beschriebenen Umhüllungsreaktion mit Mono- oder Polyolen, primären oder sekundären Aminen oder Wasser, auf der Oberfläche der Isocyanate im wesentlichen thermostabile Polyurethane bzw. Polyharnstoffe entstehen, die dann bei der späteren Verwendung der umhüllten Polyisocyanatteilchen zur Herstellung von Polyurethanformkörpern Anlaß zum Auftreten von Inhomogenitäten geben können, werden nach dem erfindungsgemäßen Verfahren Umsetzungsprodukte gebildet, die bei niedrigen Temperaturen (bis 60 °C, vorzugsweise zwischen Raumtemperatur und 50 °C) stabil sind, jedoch durch Temperaturerhöhung in die Ausgangskomponenten zurückgespalten werden können. Die erfindungsgemäß umhüllten Polyisocyanate bilden daher mit aktive Wasserstoffe aufweisenden Verbindungen, z. B. Polyolen und/oder Polyaminen, lagerstabile Einkomponentensysteme, die erst oberhalb einer noch näher zu definierenden «Aufdickungstemperatur» aushärten. Die Aufdickungstemperatur liegt in den meisten Fällen wesentlich tiefer als die Spalt- oder Deblokkierungstemperatur von Uretdiondiisocyanaten bzw. blockierten Polyisocyanaten. Die Härtungsreaktion kann, gegebenenfalls auch bei Raumtemperatur, durch Zugabe von Lösungsmitteln ausgelöst werden.

Die bei der thermischen Rückspaltung wieder freiwerdenden Amidin- bzw. Guanidinverbindungen können für die Polyadditionsreaktion der NCO-Gruppen als Katalysatoren wirken bzw. auch andere Reaktionen, z. B. die Uretdionringspaltung, auslösen (siehe auch Beispiele). Insbesondere bei einem stöchiometrischen Überschuß der NCO-Gruppen gegenüber Polyolen und/oder Polyaminen treten auch Allophanat-, Biuret- oder Trimerisierungsreaktionen auf, die durch Amidin bzw. Guanidin beschleunigt werden.

Bei Verwendung von Uretdiondiisocyanaten erfolgt unter Einfluß der freigesetzten Amidine eine rasche Uretdionring-Spaltung, wobei in einem einzigen Verfahrensschritt die hochschmelzenden, schwer löslichen Uretdiondiisocyanate in meist flüssige oder leicht lösliche Isocyanate überführt werden, die dann an der Polyadditionsreaktion teilnehmen.

Die Reaktivität der festen Polyisocyanate gegenüber Verbindungen mit aktiven Wasserstoffatomen ist überraschenderweise um so geringer, je mehr Amidin für die Umhüllungsreaktion eingesetzt wurde (vergl. Beispiele). Dies war im Hinblick auf die katalytische Wirkung von Amidinen überhaupt nicht zu erwarten. Die Retardierung der Reaktivität der festen Polyisocyanate durch Amidine ist derart ausgeprägt, daß sogar die bekanntlich rasch ablaufende Reaktion von NCO-Gruppen mit aromatisch gebundenen Aminogruppen bei Raumtemperatur völlig unterdrückt wird. Erst bei Erwärmen des Systems auf eine bestimmte Temperatur (die sogenannte Aufdickungstemperatur) tritt eine rasche und durch die vorhandenen Amidinkatalysatoren, welche jetzt freigesetzt werden, sogar merklich beschleunigte Reaktion unter Bildung der Polyurethan(harnstoff)e ein.

Es ist zwar bekannt, daß bicyclische Amidine ohne reaktive Wasserstoffatome mit Monoisocyanaten Ringschlußreaktionen unter Bildung von heterocyclischen Verbindungen mit pharmakologischer Aktivität eingehen können:

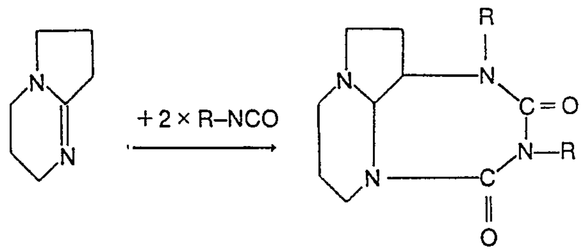


(siehe z. B. Indian J. Chem. Sect. B 14 (1976), 10, Seite 763 bis 765 und Helv. Chim. Acta 56 (1973)2, Seite 776 und 794). Diese Additionsreaktionen werden jedoch lediglich mit Monoisocyanaten beschrieben. Daß aromatische feste Polyisocyanate bei der Umsetzung mit den genannten Amidinen eine dichte Oberflächenhülle ausbilden würden, kann aus diesen Literaturstellen nicht entnommen werden. Weder über Thermostabilität noch über die mögliche Rückspaltung der Additionsverbindungen und anschließende Folgereaktionen beider Ausgangskomponenten werden Angaben gemacht.

Gegenstand der Erfindung sind auch oberflächenmodifizierte, feste, feinteilige Polyisocyanate retardierter Reaktivität, hergestellt nach dem erfindungsgemäßen Verfahren und gegebenenfalls in Form lagerstabiler Suspensionen in Polyolen und/oder aromatischen Polyaminen und/oder höhermolekularen aliphatischen Polyaminen, mit einem NCO-Restgehalt von mindestens 75%, vorzugsweise 92%, besonders bevorzugt 97%, und weniger als 99,9%, vorzugsweise weniger als 99,7%, der ursprünglich vorhandenen NCO-Gruppen der festen Ausgangspolyisocyanate. Die Aufdickungstemperatur dieser Suspensionen liegt oberhalb 60 °C, bevorzugt zwischen 80 und 140 °C und besonders bevorzugt zwischen 90 und 135 °C.

Bevorzugt ist die Suspendierung in einem Medium aus Polyolen und/oder aromatischen und/oder aliphatischen Polyaminen mit Molekulargewichten von 400 bis 6000, gegebenenfalls unter Zusatz von Polyolen und/oder aromatischen Polyaminen mit Molekulargewichten von 62 bis 399.

Besonders bevorzugt sind die polyadduktumhüllten Polyisocyanate suspendiert in aromatischen und/oder aliphatischen Polyaminen mit Molekulargewichten von 400 bis 6000, vorzugsweise 400 bis 3000, gegebenenfalls unter Zusatz von Polyolen (vorzugsweise Di- und Triolen) und/oder aromatischen Polyaminen (vorzugsweise Diaminen), des Molekulargewichts 62 bis 399 und

gegebenenfalls untergeordneten Mengen an höhermolekularen Polyolen.

Weiterhin bevorzugt sind unter Verwendung von aliphatischen bzw. cycloaliphatischen Amidin- bzw. Guanidin-Verbindungen oberflächenmodifizierte, feste Polyisocyanate, suspendiert in Polyolen mit Molekulargewichten von 400 bis 6000 sowie aromatischen Diaminen und gegebenenfalls Polyolen mit Molekulargewichten bis 399.

Bei den erfindungsgemäß einzusetzenden Amidinen handelt es sich um offenkettige oder cyclische Amidine, vorzugsweise solche der allgemeinen Formeln (III) bis (VII):

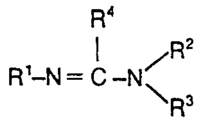 (III),

in der

$R^1$ und $R^4$ H, einen geradkettigen oder verzweigten aliphatischen Kohlenwasserstoffrest mit 1 bis 18 C-Atomen, vorzugsweise 1 bis 4 C-Atomen, einen cycloaliphatischen Kohlenwasserstoffrest mit 5 bis 7 Ring-C-Atomen, einen araliphatischen oder einen aromatischen Rest, vorzugsweise mit 6–13 C-Atomen, welche Reste gegebenenfalls inerte Substituenten aufweisen und/oder durch Struktureinheiten –O–, –S– oder $-N-(C_1-C_{18}$-)-Alkyl bzw. $-N-(C_5-C_7$-)Cycloalkyl- unterbrochen sind, bedeuten,

$R^2$ und $R^3$ gleich oder verschieden sind und Alkylen-N-[di-(cyclo)-alkyl]-Reste, vorzugsweise $-(CH_2)_n-N-(C_1$ bis $C_6$-Alkyl$)_2$-Reste (n = 2–12) darstellen oder die Bedeutung von $R^1$, ausgenommen H, (Alkyl und Cycloalkylreste wie unter $R^1$ definiert), haben,

wobei jeweils 2 der Reste $R^1$ bis $R^4$ miteinander zu einem Ring verbunden sein können und wobei gegebenenfalls mehrere Amidinreste über mehrwertige Reste verbunden sind.

Erfindungsgemäß bevorzugte cyclische Amidine sind solche der allgemeinen Formeln (IV) bis (VII), wobei in der Formel (IV)

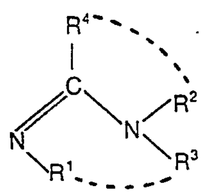 (IV)

die Reste $R^1$ und $R^3$ zusammen
und/oder
die Reste $R^2$ und $R^4$ zusammen
einen, gegebenenfalls Heteroatom(gruppen) wie –O–, –S– oder $-N-(C_1-C_4$-)Alkyl-Gruppen enthaltenden, gegebenenfalls verzweigten Alkylenrest mit 2 bis 5 C-Atomen in der Alkylenkette, vorzugsweise den $-(CH_2)_2-$ oder $-(CH_2)_3-$ Rest darstellen;
oder in der Formel (V)

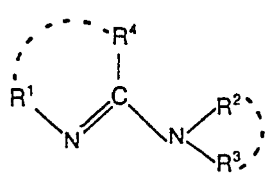 (V)

die Reste $R^1$ und $R^4$ zusammen
und/oder
die Reste $R^2$ und $R^3$ zusammen
einen, gegebenenfalls Heteroatome enthaltenden, gegebenenfalls verzweigten Alkylenrest mit 2 bis 5 C-Atomen in der Alkylenkette, vorzugsweise $-(CH_2)_2-$ und $-(CH_2)_3-$ darstellen;
oder in der Formel (VI)

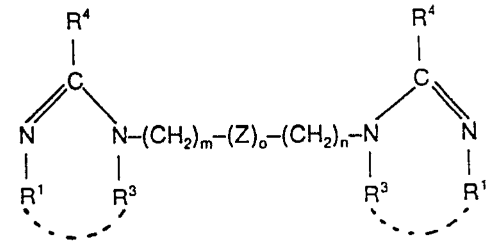 (VI)

Z eine $N-(C_1-C_{18})$-Alkylgruppe oder einen geradkettigen oder verzweigten $C_2$- bis $C_{14}$-Alkylenrest, der gegebenenfalls in der Kette durch –O– unterbrochen sein kann, einen Cycloalkylenrest mit 5 bis 8 Ringgliedern oder einen Dicyclohexylrest mit 5 bis 8 Ringgliedern oder einen Dicyclohexyl-($C_1$- bis $C_4$-alkan)-Rest darstellt und

m und n gleiche oder verschiedene ganze Zahlen von 2 bis 10, vorzugsweise 2 oder 3, sind, und

o Null oder 1

bedeutet;

besonders bevorzugte Amidine sind solche der Formel (VII)

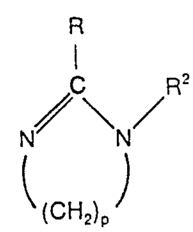 (VII)

in der

p 2, 3 oder 4 ist,

$R^4$ einen geradkettigen oder verzweigten $C_1-C_4$-Alkylrest (z. B. Methyl, Ethyl, Isopropyl oder tert.-Butyl) und

$R^2$ einen geradkettigen oder verzweigten $C_1-C_4$-Alkylrest, $-(CH_2)_p \cdot N \cdot (R^4)_2$ oder $C_5-C_7$-Cycloalkylrest darstellt.

Beispiele für offenkettige Amidine (III) sind:
N,N-Dimethylformamidin, N,N-Dimethylacetamidin,
N,N-Diethyl-formamidin, N,N,N'-Trimethylacetamidin,
N,N-Dimethyl-N'-benzyl-acetamidin,
N,N,-Dicyclohexyl-N'-methylacetamidin,
N,N-Dimethyl-N'-cyclohexyl-formamidin,
N,N-Dimethyl-N'-tert.-butyl-formamidin.

Beispiele für die besonders bevorzugten monocyclischen Amidine (IV) sind:
1,2-Dimethyl-Δ-2-imidazolin,
1-Methyl-2-phenyl-Δ-2-imidazolin,
1(N)-Methyl-Δ-2-imidazolin,
2-Benzylimino-N-methyl-caprolactam,
2-Butylimino-N-methyl-butyrolactam,
1,8-Diaza-bicyclo[5,3,0]-dec-7-en,
1,8-Diaza-bicyclo[5,4,0]-undex-7-en,

1,7-Diaza-bicyclo[4,4,0]-dec-6-en,
1,6-Diaza-bicyclo[3,4,0]-non-5-en,
1,5-Diaza-bicyclo[4,3,0]-non-5-en
1,14-Diaza-bicyclo[11,4,0]-heptadec-13-en,
1-(N)-Methyl-Δ-2-tetrahydropyrimidin,
1-Cyclohexyl-2-methyl-Δ-2-tetrahydropyrimidin,
1-Cyclohexyl-Δ-2-tetrahydropyrimidin,
1-Benzyl-2-butyl-Δ-2-tetrahydropyrimidin,
1-Methyl-2-methyl-Δ-2-tetrahydropyrimidin,
1-Butyl-2-methyl-Δ-2-tetrahydropyrimidin,
1-(2-Ethylhexyl)-2-methyl-Δ-2-tetrahydropyrimidin,
1-Dodecyl-2-methyl-Δ-2-tetrahydropyrimidin,
1-(1-Methylcyclohexyl)-2-methyl-Δ-2-tetrahydropyrimidin,
1-(2-Methylhexyl)-2-methyl-Δ-2-tetrahydropyrimidin,
1-(3,3,5-Trimethylcyclohexyl)-2-methyl-Δ-2-tetrahydropyrimidin.

Derartige Verbindungen lassen sich insbesondere entsprechend den Angaben in der DE-A-2 439 550 synthetisieren.

Ganz besonders bevorzugte Amidine sind solche vom Typ (IVa)

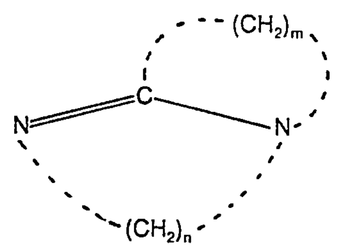

(IVa)

wobei
m 2, 3, 4, 5 oder 11 und
n 2, 3 oder 4 bedeutet.

Die Herstellung einer Anzahl solcher Verbindungen ist beispielsweise in der DE-B-1 545 855 beschrieben.

Verbindungen vom Typ (IV) mit einer Dialkylaminoalkyl-Seitengruppe $R^2$ sind beispielsweise:
1-(3-N,N-Dimethylamino-propyl)-2-methyl-Δ-2-tetrahydropyrimidin,
1-(2-N,N-Dimethylaminoethyl)-2-methyl-Δ-2-tetrahydropyrimidin,
und werden entsprechend den Angaben der DE-A-3 049 131 hergestellt.

Beispiele für die Amidine der Formel (V) sind
1-Methyl-4-(2-tetrahydroazepinyl)-piperazin

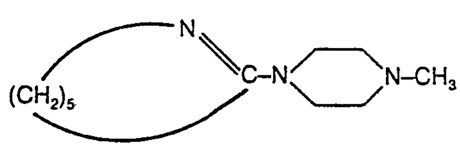

Phenyl-methyl-(2-tetrahydroazepinyl)-amin

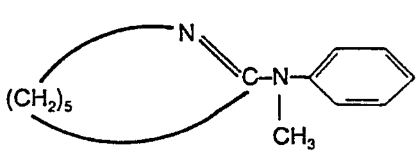

Benzyl-methyl-(2-tetrahydroazepinyl)-amin

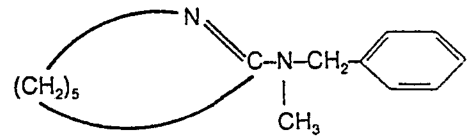

4-(2-Tetrahydroazepinyl)-morpholin

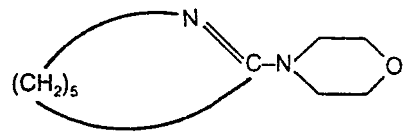

Die offenkettigen, bzw. durch Verknüpfung jeweils zweier Reste entstandenen cyclischen oder bicyclischen Amidine werden in der DE-A-2 722 514 beschrieben.

Allgemeine Hinweise zur Synthese von Amidinen finden sich in Houben-Weyl, Methoden der Organischen Chemie, Band XI, 2, Seiten 38 bis 66; Verlag G. Thieme, Stuttgart 1958.

Verbindungen vom Typ der Formel (VI) sind beispielsweise

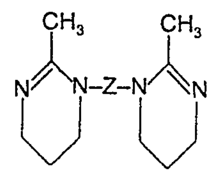

wobei vorzugsweise
Z = $-(CH_2)_2-$
$-(CH_2)_6-$
$-(CH_2)_3-N(CH_3)-(CH_2)_3-$
$-(CH_2)_6 \cdot NH \cdot CO \cdot O \cdot (CH_2)_3 \cdot O \cdot (CH_2)_3 \cdot O \cdot CO-NH(CH_2)_6-$
oder
$-(CH_2)_2-O-(CH_2)_2-$ ist.

Diese Verbindungen werden nach den in der DE-A-3 049 131 angegebenen Methoden erhalten.

Bei den erfindungsgemäß einzusetzenden Guanidinen entsprechend der Formel (VIII) handelt es sich bevorzugt um offenkettige oder cyclische Guanidine, aber auch Di- bzw. Tri-Guanidine, sowie Verbindungen, welche den Guanidinrest mehrfach tragen können:

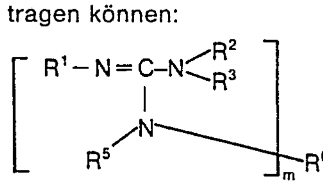

(VIII)

In der Formel (VIII) bedeuten dabei:
m = 1 oder 2,
$R^1$, $R^2$, $R^3$ steht für Reste, wie sie bereits für die Amidine in der Formel (III) beschrieben sind;
$R^5$ hat eine Bedeutung wie $R^2$,
$R^6$ steht entweder für einen einwertigen Rest der für $R^2$ genannten Art oder für einen zweiwertigen $C_2$–$C_{12}$-Alkylenrest, der gegebenenfalls durch –O–, –N–($C_1$–$C_{18}$-Alkyl)- oder –N($C_5$–$C_7$-Cycloalkyl)-Reste unterbrochen sein kann,
wobei jeweils zwei der Reste $R^1$, $R^2$, $R^3$, $R^5$ und $R^6$ miteinander cyclisch verknüpft sein können, so daß cyclische Guanidine der nachfolgenden Strukturen entstehen:

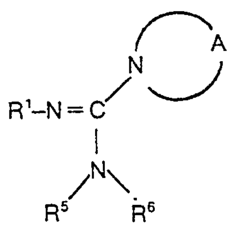

(VIII–a)

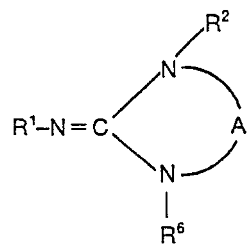

(VIII–b)

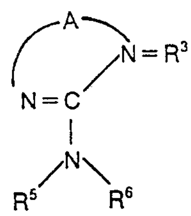

(VIII–c)

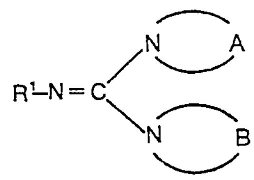

(VIII–d)

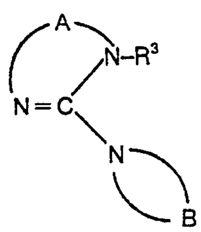

(VIII–e)

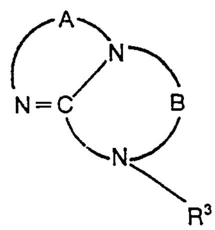

(VIII–f)

In den Formeln (VIII-a bis VIII-f) bedeuten die durch Verknüpfung jeweils zweier Substituenten entstandenen Gruppierungen A und B mindestens zweigliedrige, vorzugsweise 2 bis 5 Kettenglieder enthaltende, bivalente, aliphatische, cycloaliphatische, araliphatische oder aromatische Kohlenstoffketten, die gegebenenfalls auch durch Heteroatome (–O–, –S–, –N(Alkyl)–) unterbrochen oder mit gegenüber Isocyanaten inerten Substituenten (z. B. Halogen, Alkyl) substituiert sein können.

Weitere geeignete Guanidine sind in der folgenden Zusammenstellung wiedergegeben.

Es sei darauf hingewiesen, daß Amidine der oben genannten Formeln, in welchen $R^1$ = Wasserstoff ist, bei Raumtemperatur an diesem Wasserstoffatom nicht mit Isocyanaten reagieren.

| Substituenten am Stickstoff | x-fach substituiert, | in folgenden Guanidin-Grundgerüsten | |
|---|---|---|---|
| Methyl-, Ethyl,- (Iso)propyl-,<br>(Iso)butyl-, (tert.)-Butyl-,<br>(Iso)pentyl-, Hexyl-,<br>2-Ethylhexyl-, Octyl-,<br>Dodecyl-, Stearyl-,<br>Ethoxypropyl-, Butoxyhexyl-,<br>Cyanoethyl-, Cyanohexyl-,<br>Butoxycarbonyl-methyl-,<br>Methoxy-carbonyl-methyl-,<br>Dimethylaminopropyl-,<br>Cyclopentyl-, Cyclohexyl-,<br>(Chlor)Benzyl-, Phenethyl,<br>Phenyl-, Tolyl-, Methoxyphenyl-,<br>Ethoxycarbonylphenyl-, | tetra- | 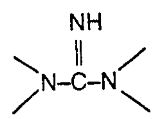 | |
| | penta- | | 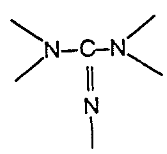 |
| | tri- | 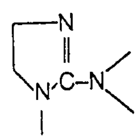 | |
| | tri- | | 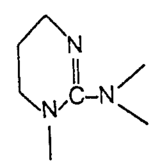 |
| | tri- | 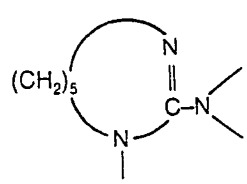 | |
| | mono- | | 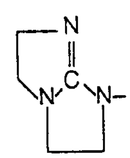 |
| | mono- | 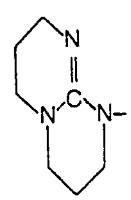 | |
| | mono- | | 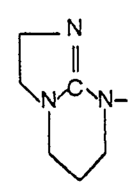 |

Weitere Beispiele sind Iminokohlensäure-bis-(sek.)-amide folgender Zusammensetzung

| | | |
|---|---|---|
| Methylimino-<br>Ethylimino-<br>Cyanethylimino-<br>Dibutylamino-butylimino<br>Hexylimino-<br>Stearylimino-<br>Cyclohexylimino-<br>Benzylimino-<br>Phenylimino-<br>p-Chlorbenzylimino-<br>4-Methyl-benzylimino- | Kohlensäure | -bis-morpholid<br>-bis-piperidid<br>-bis-N'-Methyl-piperazid |

Besonders geeignete cyclische Guanidinverbindungen werden in den folgenden Formeln wiedergegeben:

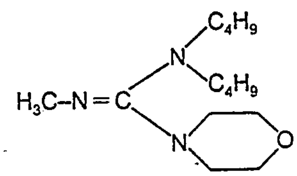

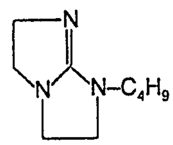

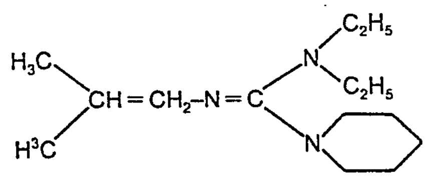

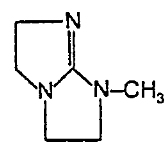

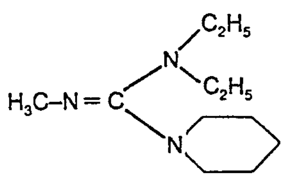

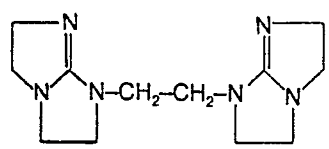

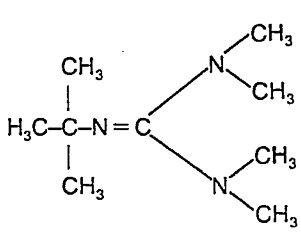

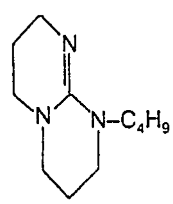

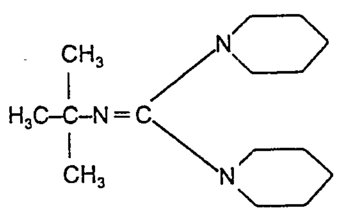

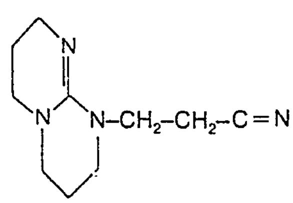

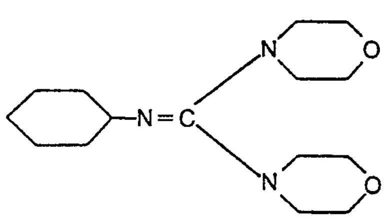

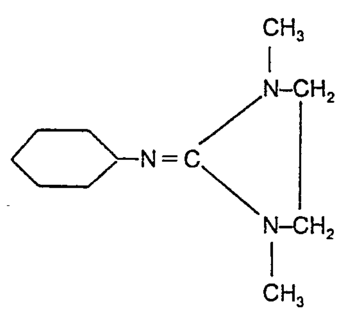

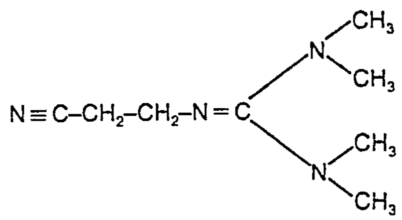

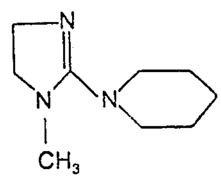

Technisch besonders bevorzugt sind Tetramethylguanidin, Pentamethylguanidin, sowie folgende cyclische Guanidinverbindungen

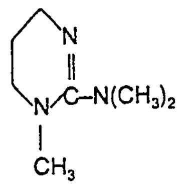

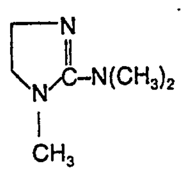

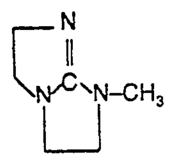

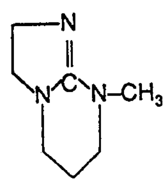

Anstelle der freien Amidine bzw. Guanidine können auch deren Säureadditionssalze eingesetzt werden, jedoch sind diese Salze weniger bevorzugt, insbesondere wenn als Suspensionsmedium ein Gemisch aus Polyetherpolyolen und niedermolekularen aromatischen Diaminen verwendet wird. Ihre katalytische Wirksamkeit bei der Hitzevernetzung ist deutlich geringer als jene der freien Amidine und Guanidine, so daß zur vollständigen Umsetzung der festen Polyisocyanate mit den Polyetherpolyolen zusätzliche Katalysatoren, wie metallorganische Zinnsalze oder tertiäre Amine erforderlich sind (vergl. Beispiele). Der Ausdruck «Säureadditionssalze» soll alle Salze umfassen, welche aus Amidinen bzw. Guanidinen mit Protonendonatoren gebildet worden sind. Typische Säuren zur Herstellung dieser Salze sind Monocarbonsäuren, wie Ameisensäure, Essigsäure, Propionsäure, Buttersäure, Capronsäure, Valeriansäure, Octylsäure, Laurinsäure, Stearinsäure, Ölsäure; Dicarbonsäuren, wie Oxalsäure, Malonsäure, Bernsteinsäure, Fumarsäure, Adipinsäure; Hydroxylsäuren, wie Glykolsäure, Milchsäure und Weinsäure; Sulfonsäuren, wie Alkyl- oder Aryl-Sulfonsäuren, Sulfaminsäure, Sulfanilsäure; anorganische Säuren, wie Kohlensäure, Phosphorsäure, Salzsäure und Schwefelsäure; andere Protonendonator-Verbindungen, wie Sulfonamide; Phenole, wie Phenol, Kresol oder Thiophenole; Enole, wie Barbitursäure und Harnsäure. Besonders bevorzugt sind Fettsäuren mit wenigstens zwei Kohlenstoffatomen und Phenole.

Im erfindungsgemäßen Verfahren ist es manchmal zweckmäßig, geringe Mengen an Wasser, niedermolekularen Glykolen oder Aminen dem Reaktionsgemisch zuzufügen (vergl. auch Beispiele). Der Vorteil dieser Verfahrensvariante liegt darin, daß man auch bei geringerer Amidindosierung die angestrebte Lagerstabilität der Mischung erreicht und den bei der Hitzeverfestigung durch das Amidin bedingten – in manchen Fällen aber nicht erwünschten – Katalyseeffekt auf die NCO-Folgereaktionen vermindern kann (z. B. geringere Uretdionringspaltung beim dimeren TDI und dadurch Erhalt des Uretdion-Hartsegmentes im Polyurethan, oder auch Verminderung der Biuretisierung bei Verwendung des Toluylendiisocyanat-Harnstoff-diisocyanates).

Als Ausgangskomponenten für das erfindungsgemäße Verfahren sind alle Di- oder Polyisocyanate oder deren beliebige Gemische geeignet, sofern sie einen Schmelzpunkt oberhalb 40 °C, bevorzugt oberhalb 80 °C, besonders bevorzugt oberhalb 130 °C, aufweisen.

Es können dies aliphatische, cycloaliphatische, araliphatische, bevorzugt aber aromatische und heterocyclische Polyisocyanate sein, ferner Polyphenyl-polymethylen-polyisocyanate, erhalten durch Anilin-Formaldehyd-Kondensation und anschließende Phosgenierung nach den britischen Patentschriften 874 430 und 848 671, weiterhin perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate, Urethan- oder Harnstoffgruppen aufweisende Polyisocyanate, acylierte Harnstoffgruppen aufweisende Polyisocyanate, Biuretgruppen aufweisende Polyisocyanate, durch Telomerisationsreaktion hergestellte Polyisocyanate, Estergruppen aufweisende Polyisocyanate, ferner bevorzugt Uretdiongruppen aufweisende Diisocyanate und Harnstoffgruppen aufweisende Diisocyanate. Als Beispiele für die einsetzbaren Polyisocyanate seien genannt:

| | Fp.: |
|---|---|
| p-Xylylendiisocyanat | 45–46 °C |
| 1,5-Diisocyanatomethylnaphthalin | 88–89 °C |
| 1,3-Phenylendiisocyanat | 51 °C |
| 1,4-Phenylendiisocyanat | 94–96 °C |
| 1-Methylbenzol-2,5-diisocyanat | 39 °C |
| 1,3-Dimethylbenzol-4,6-diisocyanat | 70–71 °C |
| 1,4-Dimethylbenzol-2,5-diisocyanat | 76 °C |
| 1-Nitrobenzol-2,5-diisocyanat | 59–61 °C |
| 1,4-Dichlorbenzol-2,5-diisocyanat | 134–137 °C |
| 1-Methoxybenzol-2,4-diisocyanat | 75 °C |
| 1-Methoxybenzol-2,5-diisocyanat | 89 °C |
| 1,3-Dimethoxybenzol-4,6-diisocyanat | 125 °C |
| Azobenzol-4,4′-diisocyanat | 158–161 °C |
| Diphenylether-4,4′-diisocyanat | 66–68 °C |
| Diphenylmethan-4,4′-diisocyanat | 42 °C |
| Diphenyl-dimethylmethan-4,4′-diisocyanat | 92 °C |
| Naphthalin-1,5-diisocyanat | 130–132 °C |
| 3,3′-Dimethylbiphenyl-4,4′-diisocyanat | 68–69 °C |

| | |
|---|---|
| Diphenyldisulfid-4,4'-diisocyanat | 58–60 °C |
| Diphenylsulfon-4,4'-diisocyanat | 154 °C |
| 1-Methylbenzol-2,4,6-triisocyanat | 75 °C |
| 1,3,5-Trimethylbenzol-2,4,6-triisocyanat | 93 °C |
| Triphenylmethan-4,4',4''-triisocyanat | 89–90 °C |
| 4,4'-Diisocyanato-(1,2)-diphenyl-ethan | 88–90 °C |
| dimeres 1-Methyl-2,4-phenylendiiso-cyanat | 156 °C |
| dimeres 1-Isopropyl-2,4-phenylendiiso-cyanat | 125 °C |
| dimeres 1-Chlor-2,4-phenylendiiso-cyanat | 177 °C |
| dimeres 2,4'-Diisocyanato-diphenyl-sulfid | 178–180 °C |
| dimeres Diphenylmethan-4,4'-diisocyanat | |
| 3,3'-Diisocyanato-4,4'-dimethyl-N,N'-diphenyl-harnstoff | |
| 3,3'-Diisocyanato-2,2'-dimethyl-N,N'-diphenyl-harnstoff | |
| N,N'-Bis[4(4-Isocyanatophenylmethyl)phenyl]-harnstoff | |
| N,N'-Bis[4(2-Isocyanatophenylmethyl)phenyl]-harnstoff. | |

Erfindungsgemäß besonders bevorzugt werden dimeres
1-Methyl-2,4-diisocyanatobenzol,
dimeres 4,4'-Diisocyanato-diphenylmethan,
3,3'-Dimethyl-4,4'-diisocyanato-diphenyl,
der 3,3'-Diisocyanato-4,4'-dimethyl-N,N'-diphenylharnstoff,
der Bis-N,N'-[4-(4-Isocyanatophenylmethyl)-phenyl]-harnstoff,
1,5-Naphthalin-diisocyanat und
1,4-Phenylendiisocyanat.

Neben den Amidinen und Guanidinen können im erfindungsgemäßen Verfahren zur Bildung der Oberflächenhülle als weitere mit den NCO-Gruppen des festen Polyisocyanats reagierende Verbindungen aliphatische Polyamine, Hydrazine, Alkylhydrazine, Polyhydrazidverbindungen oder Wasser in solchen molaren Mengen mitverwendet werden, daß maximal 25% der NCO-Gruppen des festen Polyisocyanats umgesetzt werden. Diese in untergeordneten Mengen (bis maximal 50 Äquivalent-%) einzusetzenden Verbindungen sind z. B. zwei- oder mehrfunktionelle Verbindungen mit primären und/oder sekundären Aminogruppen und einem Molekulargewicht von 60 bis etwa 6000, vorzugsweise 60 bis 3000, deren Aminogruppen an aliphatische Reste (einschließlich cycloaliphatische) oder an den aliphatischen Teil eines araliphatischen Restes gebunden sind. Diese aliphatischen Di- und Polyamine können gegebenenfalls neben den Aminogruppen auch noch OH-Gruppen, tertiäre Aminogruppen, Ethergruppen, Thioethergruppen, Urethangruppen, Harnstoffgruppen, Carboxylgruppen oder Carbonsäurealkylestergruppen aufweisen.

Geeignete Di- und Polyamine sind z. B.
Ethylendiamin, 1,2- und 1,3-Propandiamin,
1,4-Butandiamin, 1,6-Hexandiamin,
Neopentandiamin,
2,2,4- und 2,4,4-Trimethyl-1,6-diaminohexan,
2,5-Diamino-2,5-dimethylhexan,
1,10-Decandiamin,
1,11-Undecandiamin, 1,12-Dodecandiamin,
Bis-aminomethyl-hexahydro-4,7-methano-indan (TCD-Diamin),
1,3-Cyclohexandiamin, 1,4-Cyclohexandiamin,
1-Amino-3,3,5-trimethyl-5-aminomethyl-cyclohexan
(Isophorondiamin),
2,4- und/oder 2,6-Hexahydrotoluylendiamin,
2,4'- und/oder 4,4'-Diaminodicyclohexylmethan,
m- oder p-Xylylendiamin,
Bis-(3-aminopropyl)-methylamin,
Bis-N,N'-(3-aminopropyl)-piperazin und
1-Amino-2-aminomethyl-3,3,5-(3,5,5)-trimethyl-cyclopentan,
2,2-Dialkylpentan-1,5-diamine oder Triamine wie
1,5,11-Triaminoundecan, 4-Aminomethyl-1,8-diaminooctan,
Lysinmethylester, cycloaliphatische Triamine gemäß DE-A-2 614 244,
4,7-Dioxadecan-1,10-diamin,
2,4- und 2,6-Diamino-3,5-diethyl-1-methylcyclohexan und deren Gemische,
alkylierte Diaminodicyclohexylmethane, z. B.
3,3'-Dimethyl-4,4'-diamino-dicyclohexylmethan
oder 3,5-Diisopropyl-3',5'-diethyl-4,4'-diamino-dicyclohexylmethan,
perhydrierte Diaminonaphthaline,
perhydrierte Diaminoanthrazene oder höherwertige Amine wie
Diethylentriamin, Triethylentetramin,
Pentaethylenhexamin, Dipropylentriamin,
Tripropylentetramin oder
N,N'-Dimethyl-ethylendiamin,
2,5-Dimethylpiperazin, 2-Methylpiperazin,
Piperazin-(hydrat) und 2-Hydroxyethylpiperazin.

Außer diesen niedermolekularen aliphatischen Diaminen oder im Gemisch hiermit können auch höhermolekulare aliphatische Di- und Polyamine verwendet werden, wie sie z. B. durch reduktive Aminierung von Polyoxyalkylenglykolen mit Ammoniak nach BE-A-634 741 oder US-A-3 654 370 erhalten werden können. Weitere höhermolekulare Polyoxyalkylen-Polyamine können nach Methoden, wie sie in der Firmenschrift «Jeffamine, Polyoxypropylene Amines» von Texaco Chemical Co., 1978, aufgezählt werden, hergestellt werden, beispielsweise durch Hydrierung von cyanethylierten Polyoxypropylenglykolen (DE-A-1 193 671), durch Aminierung von Polypropylenglykolsulfonsäureestern (US-A-3 236 895), durch Behandlung eines Polyoxyalkylenglykols mit Epichlorhydrin und einem primären Amin (FR-A-1 466 708) oder durch Umsetzung von NCO-Prepolymeren mit Hydroxylgruppen aufweisenden Enaminen, Aldiminen oder Ketiminen und anschließende Hydrolyse gemäß DE-A-2 546 536. Geeignete höhermolekulare aliphatische Di- und Polyamine sind auch die nach DE-A-2 948 419 und DE-A-3 039 600 durch alkalische Basen-Hydrolyse von (mit aliphatischen Diisocyanaten aufgebauten) NCO-Prepolymeren über die Carbamatstufe zugänglichen Polyamine. Diese höhermolekularen Polyamine besitzen Molekulargewichte von etwa 400 bis 6000, vorzugsweise 400 bis 3000 und besonders bevorzugt von 1000 bis 3000. Infolge ihres Aufbaus sind derartige höhermolekulare Polyamine zur Ausbildung einer nicht-brüchigen, «elastischen» Polyharnstoffumhüllung besonders geeignet.

Geeignete Hydrazingruppen aufweisende Verbindungen sind Hydrazin, Alkylhydrazine sowie N,N'-Dialkylhydrazine, vorzugsweise mit $C_1$–$C_6$-Alkylgruppen, die auch als weitere Substituenten Chlor- oder OH-Gruppen tragen können (mit Molekulargewichten von vorzugsweise 32 bis 198) und/oder zwei- oder mehrfunktionelle, nieder- oder höhermolekulare Verbindungen mit $-CO \cdot NH \cdot NH_2$-Endgruppen, und einem Molekulargewicht von 90 bis etwa 6000, vorzugsweise 90 bis 3000. Es sind dies z. B. Hydrazin, z. B. in Form von Hydrazinhydrat, alkylsubstituierte Hydrazine, z. B. Methylhydrazin, Ethylhydrazin, Hydroxyethyl-hydrazin oder N,N'-Dimethylhydrazin. Geeignete Verbindungen mit Hydrazid-Endgruppen sind z. B. Di- oder Polyhydrazide wie Carbodihydrazid, Hydracrylsäurehydrazid, Oxalsäuredihydrazid, Adipinsäuredihydrazid, Terephthalsäuredihydrazid, Isophthalsäurehydrazid oder Verbindungen mit Hydrazid- und Semicarbazid-, Carbazinester- oder Amino-Gruppen, z. B. β-Semicarbazidopropionsäurehydrazid, 2-Semicarbazidoethylencarbazinester, Aminoessigsäurehydrazid, β-Aminopropionsäurehydrazid oder Biscarbazinester oder Bissemicarbazide wie Ethylen-bis-carbazinester bzw. Ethylen-bis-semicarbazid oder Isophoron-bis-semicarbazid. Bevorzugt sind Hydrazin und niedermolekulare Verbindungen mit $-CO-NH-NH_2$-Gruppen mit Molekulargewichten von 32 bis 399. Besonders bevorzugt ist Hydrazinhydrat und β-Semicarbazido-propionsäurehydrazid sowie Alkylenbissemicarbazide.

Die Amidin- und Guanidinverbindungen werden in Mengen von 0,001 bis 0,25 Äquivalent Amidin- bzw. Guanidingruppierung pro Äquivalent NCO im Polyisocyanat eingesetzt, vorzugsweise 0,001 bis 0,08 Äquivalent, besonders bevorzugt 0,003 bis 0,03 Äquivalent.

Im erfindungsgemäßen Verfahren werden Temperaturen unter den jeweiligen Schmelztemperaturen des Polyisocyanats eingehalten. Sie liegen im allgemeinen unter 70 °C, bevorzugt bei 0 bis 50 °C.

Die Umhüllungsreaktion ist in der Regel innerhalb weniger Minuten abgeschlossen, so daß auch eine kontinuierliche Arbeitsweise bei der Herstellung der erfindungsgemäßen Suspensionen bzw. Einkomponentensysteme möglich ist.

Das erfindungsgemäße Verfahren wird in einem flüssigen Medium, das kein (gutes) Lösungsmittel für die festen Polyisocyanate darstellt, durchgeführt.

Das flüssige Medium kann aus Mono- und/oder (bevorzugt) Polyolen und/oder aromatischen Polyaminen mit Molekulargewichten von 62 bis 6000 bestehen. Vorzugsweise werden Polyole und/oder insbesondere aromatische Polyamine des Molekulargewichtsbereichs 400 bis 6000, vorzugsweise 400 bis 3000, besonders bevorzugt 1000 bis 3000, eingesetzt, gegebenenfalls im Gemisch mit niedermolekularen Polyolen und/oder aromatischen niedermolekularen Polyaminen.

Beispiele für Monoalkohole als flüssiges Medium sind längerkettige Alkohole wie Isohexadecanol, ferner Propoxylierungsprodukte von einwertigen Alkoholen mit Molekulargewichten von vorzugsweise 400 bis 6000, z. B. Propoxylierungsprodukte von n-Butanol. Diese Monoalkohole sind jedoch weniger bevorzugt, weil sie nicht für die Synthese von Polyurethanen weiter verwendet werden können. Sie müssen daher in einem zusätzlichen Schritt erst entfernt werden, bevor man die polymerumhüllten Polyisocyanate in den polyurethanbildenden Reaktivsystemen einsetzt.

Geeignete niedermolekulare Polyole sind beispielsweise Butandiol-1,4, Decandiol-1,10, Neopentylglykol, Tetra-(hydroxypropyl)-ethylendiamin oder Ricinusöl.

Geeignete Polyhydroxylverbindungen mit 2 bis 8, vorzugsweise 2 bis 4, Hydroxylgruppen und einem Molekulargewicht von 400 bis 6000 sind Polyester, Polyether, Polythioether, Polyacetale, Polycarbonate, Polylactone oder Polyesteramide, sowie auch Polybutadienverbindungen oder ihre Mischungen, wie sie für die Herstellung von homogenen, gegebenenfalls zellförmigen oder schaumstoffartigen Polyurethanen an sich bekannt sind. Besonders bevorzugt sind Polyether und Polyester, z. B. Polyoxytetramethylen-glykole oder Ethoxylierungs- und/oder Propoxylierungsprodukte von niedermolekularen Di- und Polyolen oder Di- und Polyaminen, z. B. propoxyliertes Trimethylolpropan, propoxyliertes Ethylendiamin oder lineare oder verzweigte Polypropylenglykolether, die anteilsweise in statistischer, blockartiger oder endständiger Form Oxyethylengruppen enthalten können und insgesamt Molekulargewichte von 400 bis 6000 aufweisen.

Die in Frage kommenden Polyether sind solche der an sich bekannten Art und werden z. B. durch Polymerisation von Tetrahydrofuran oder von Epoxiden wie Ethylenoxid, Propylenoxid, Butylenoxid, Styroloxid oder Epichlorhydrin bzw. durch Anlagerung dieser Epoxidverbindungen, vorzugsweise von Ethylenoxid oder Propylenoxid, gegebenenfalls im Gemisch oder nacheinander, an Startkomponenten mit reaktionsfähigen Wasserstoffatomen wie Wasser, mehrwertige Alkohole, Ammoniak oder mehrwertige Amine oder Zucker hergestellt.

Die in Frage kommenden, Hydroxylgruppen aufweisenden Polyester sind z. B. Umsetzungsprodukte von mehrwertigen, vorzugsweise zweiwertigen, und gegebenenfalls zusätzlich drei- oder mehrwertigen Alkoholen mit mehrwertigen, vorzugsweise zweiwertigen, Polycarbonsäuren oder deren Anhydriden oder entsprechenden Polycarbonsäureestern von niedrigen Alkoholen.

Auch Polyester aus Lactonen, z. B. ε-Caprolacton, oder aus Hydroxycarbonsäuren, z. B. ω-Hydroxycapronsäure, sind einsetzbar, insbesondere wenn sie zusätzliche Komponenten, wie Diethylenglykol oder 1,4-Butandiol, enthalten, um ihre hohe Kristallinität zu mindern.

Als Polyacetale sind z. B. die aus Glykolen und Formaldehyd herstellbaren Verbindungen geeignet.

Als Hydroxylgruppen aufweisende Polycarbonate kommen solche der an sich bekannten Art in Betracht, z. B. die durch Umsetzung von Propandiol-1,3, Butandiol-1,4 und/oder Hexandiol-1,6, Di-, Tri- oder Tetraethylenglykol oder Thiodiglykol mit Diarylcarbonaten, z. B. Diphenylcarbonat, oder Phosgen, hergestellt werden können.

Auch Hydroxylendgruppen aufweisende Polybutadiene sind erfindungsgemäß geeignet; sie ergeben bei der späteren Aushärtung des lagerstabilen Einkomponenten-PU-Reaktivsystems besonders elastische und hydrolysenstabile Produkte. Es können gegebenenfalls auch Polyhydroxylverbindungen eingesetzt werden, in welchen hochmolekulare Polyaddukte bzw. Polykondensate oder Polymerisate in feindisperser oder auch gelöster Form enthalten sind.

Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen in situ in den obengenannten Hydroxylgruppen aufweisenden Verbindungen, ablaufen läßt.

Auch durch Vinylpolymerisate modifizierte Polyhydroxylverbindungen, wie sie z. B. durch Polymerisation von Styrol und Acrylnitril in Gegenwart von Polyethern oder Polycarbonatpolyolen erhalten werden, sind für das erfindungsgemäße Verfahren geeignet.

Weitere Vertreter der genannten zu verwendenden Verbindungen sind z. B. in High Polymers, Vol. XVI, «Polyurethans, Chemistry and Technology», verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z. B. auf den Seiten 45 bis 71, sowie in der DE-A-2 854 384 ausführlich beschrieben.

Es ist auch möglich, Mischungen der obengenannten Polyhydroxylverbindungen einzusetzen. Die Polyhydroxyverbindungen können auch bereits mit unterschüssigen Mengen an Diisocyanaten vorverlängert worden sein.

Als flüssiges Medium werden im erfindungsgemäßen Verfahren bevorzugt flüssige oder niedrigschmelzende (< 50 °C), höhermolekulare aromatische Polyamine verwendet. Niedermolekulare aromatische Polyamine (Molekulargewicht bis 399) sind als alleiniges flüssiges Medium weniger bevorzugt, können jedoch den höhermolekularen Polyaminen zugesetzt werden.

Als aromatische Polyaminoverbindungen mit einem Molekulargewicht von 400 bis 6000 werden insbesondere solche eingesetzt, wie sie durch Hydrolyse von entsprechenden NCO-Prepolymeren auf der Basis von höhermolekularen Polyhydroxylverbindungen und überschüssigen aromatischen Diisocyanaten durch (vorzugsweise basische) Hydrolyse hergestellt werden können. Beispiele für dieses Verfahren werden in DE-A-2 948 419, DE-A-3 039 600, DE-A-3 112 118, der EP-A-61 627, EP-A-71 132 und EP-A-71 139 angegeben. In der erstgenannten Druckschrift werden auch weitere Verfahren des Standes der Technik zur Herstellung von aromatischen Aminoverbindungen höhermolekularer Struktur genannt, wie sie für das erfindungsgemäße Verfahren geeignet sind. Es handelt sich bei dem Verfahren nach DE-A-2 948 419 und den anderen zitierten Druckschriften vorzugsweise um Polyether-Polyamine, aber auch Polyester-, Polyacetal-, Polythioether- oder Polycaprolacton-Polyamine, vorzugsweise 2- oder 3-funktionelle Polyamine, welche Urethangruppen (aus der Reaktion der entsprechenden höhermolekularen Polyhydroxylverbindungen mit den überschüssigen Polyisocyanaten) enthalten und die Aminogruppen an dem Rest des (ehemaligen) Polyisocyanats tragen. Die aromatischen, höhermolekularen Polyamine können jedoch auch nach anderen Verfahren, z. B. durch Umsetzung von NCO-Prepolymeren mit überschüssigen Mengen an Hydrazin, Aminophenylethylamin, oder anderen Diaminen entsprechend DE-B-1 694 152 hergestellt werden; eine andere Synthesemöglichkeit beschreibt die FR-A-1 415 317 durch Überführung der NCO-Prepolymere mit Ameisensäure in die N-Formylderivate und deren Verseifung. Auch die Umsetzung von NCO-Prepolymeren mit Sulfaminsäure gemäß DE-B-1 155 907 führt zu höhermolekularen Polyaminen. Die höhermolekularen Polyamine können auch durch Reaktion mit unterschüssigen Mengen an Diisocyanaten vorverlängert worden sein.

Im erfindungsgemäßen Verfahren können als flüssiges Medium auch Weichmacher, vorzugsweise mit Siedepunkten > 250 °C, verwendet oder mitverwendet werden, z. B. Phthalate, wie Dioctyl-, Diisododecyl-, Dibenzyl- und Butyl-benzylphthalat, oder auch Phosphate mit bis 8 C-Atomen im Alkylrest, wie Trioctylphosphat, oder Kohlenwasserstoffe wie sog. Butadienöle. Dabei wird im allgemeinen so verfahren, daß das feinpulverisierte, feste Isocyanat in eine Lösung des Amidins bzw. Guanidins im Weichmacher, vorzugsweise bei Raumtemperatur eingerührt wird. Der so erhaltenen Suspension von polymerumhüllten Polyisocyanatteilchen können gegebenenfalls weitere Komponenten, wie z. B. höhermolekulare aromatische Polyamine, zugesetzt werden. Man kann jedoch auch die Weichmacher, mit höhermolekularen Polyaminen vermischt, als flüssiges Medium bei der Bildung der Suspension der polyadduktumhüllten Polyisocyanate einsetzen. Auch eine Isolierung der polyadduktumhüllten Polyisocyanate, z. B. durch Filtration, aus der Suspension im Weichmacher und deren nachträgliche Suspendierung in den höhermolekularen Polyol- und/ oder Polyaminoverbindungen ist möglich, wenn auch nicht bevorzugt.

Als flüssiges Medium für das erfindungsgemäße Verfahren ist auch Wasser geeignet, wobei man im Wasser die Amidine bzw. Guanidine löst

und dieser Lösung die festen Polyisocyanate zusetzt.

Bei Verwendung von Wasser als flüssigem Medium wird im allgemeinen das polyadduktumhüllte Polyisocyanat durch Filtration isoliert, gegebenenfalls vorsichtig getrocknet und in der isolierten, feinpulvrigen Form höhermolekularen Polyolen und/oder Polyaminen und gegebenenfalls weiteren Ausgangskomponenten für die Einkomponenten-Polyurethan-Reaktivmischungen zugemischt. Diese Zwischenstufe einer Isolierung der polyadduktumhüllten Polyisocyanate ist jedoch nicht bevorzugt.

Anstelle oder zusammen mit den genannten flüssigen Medien (Polyolen, Polyaminen, Weichmachern oder Wasser) können gegebenenfalls auch unpolare oder wenig polare Lösungsmittel mit Molekulargewichten < 400 verwendet werden, z. B. aliphatische, cycloaliphatische oder aromatische Kohlenwasserstoffe, Halogenkohlenwasserstoffe, Ether, Ketone oder Ester, vorzugsweise mit Siedepunkten unter 146 °C. Hierdurch läßt sich die Viskosität des flüssigen Mediums erniedrigen. Das Lösungsmittel wird zweckmäßig anschließend wieder entfernt, vorzugsweise im Vakuum.

Durch das erfindungsgemäße Verfahren erhält man Suspensionen von durch eine Oberflächenhülle in ihrer Reaktivität retardierten, festen Polyisocyanaten in dem flüssigen Medium. Die Suspensionen enthalten mindestens 3 Gew.-%, bevorzugt mindestens 5 Gew.-%, und in den meisten Fällen mindestens 7,5 Gew.-% feste polyadduktumhüllte Polyisocyanate; die Feststoffgehalte liegen zumeist unter 70 Gew.-%, vorzugsweise unter 50 Gew.-% und in den meisten Fällen unter 40 Gew.-%.

Ein weiterer Erfindungsgegenstand ist auch die Verwendung der nach dem erfindungsgemäßen Verfahren erhältlichen, oberflächenmodifizierten festen Polyisocyanaten retardierter Reaktivität, vorzugsweise suspendiert in Polyolen und/oder aromatischen Polyaminoverbindungen und/oder höhermolekularen aliphatischen Polyaminoverbindungen zur Herstellung von Polyurethanen, vorzugsweise in Form von lagerstabilen Einkomponentensystemen, enthaltend

A) Polyisocyanate,
B) höhermolekulare Polyhydroxyl- und/oder Polyaminoverbindungen,
C) gegebenenfalls niedermolekulare Kettenverlängerungsmittel,
D) gegebenenfalls Polyurethankatalysatoren und
E) gegebenenfalls übliche Hilfs- und Zusatzstoffe.

Die fließfähigen oder leicht aufschmelzbaren PU-Reaktivsysteme haben eine Aufdickungstemperatur von $\geqq$ 55 °C und können durch Hitzeeinwirkung, Scherkräfte und/oder polare Lösungsmittel zu massiven oder zelligen Polyurethanen ausgehärtet werden.

Eine besonders bevorzugte Verwendungsform sind Einkomponentensysteme auf Basis einer Suspension der polyadduktumhüllten Polyisocyanate in höhermolekularen aromatischen und/oder aliphatischen Polyaminen, gegebenenfalls unter Zusatz von niedermolekularen aromatischen Polyaminen, vorzugsweise Diaminen, und/oder gegebenenfalls niedermolekularen Polyolen mit Molekulargewichten von 62 bis 399. Hierbei sind keine zusätzlichen Katalysatoren für die Aushärtung zum Polyurethanharnstoff erforderlich und die Temperaturen, bzw. die Aushärtungszeiten, liegen niedriger als bei Polyolsystemen; es werden Elastomere mit sehr günstigen Eigenschaften erhalten.

Eine weitere bevorzugte Verwendungsform sind Einkomponentensysteme auf Basis von Suspensionen der erfindungsgemäß umhüllten Polyisocyanate in höhermolekularen Polyolen B) und aromatischen Polyaminen als Kettenverlängerungsmittel C), wobei letztere bereits bei der Herstellung der Suspension mitverwendet und auch der Suspension erst später zugesetzt worden sind. Eine derartige Suspension kann gegebenenfalls niedermolekulare Polyole als zusätzliche Kettenverlängerungsmittel enthalten. Mindestens 10 Mol-%, bevorzugt mindestens 50 Mol-%, der Kettenverlängerungsmittel C) sind jedoch aromatische Polyamine (bevorzugt Diamine). Auch diese Suspensionen zeichnen sich durch ein günstiges Härtungsverhalten und gegenüber nur Polyol-Kettenverlängerungsmittel enthaltenden Systemen durch bessere Elastomereigenschaften, z. B. Festigkeiten, Härten, Spannungswerte und Erweichungsbereiche, aus.

Bevorzugt werden die erfindungsgemäß oberflächenmodifizierten, festen Polyisocyanate retardierter Reaktivität als alleinige Polyisocyanatkomponente der oben genannten Polyurethan-Reaktivsysteme eingesetzt. Es ist jedoch auch möglich, Kombinationen aus den erfindungsgemäß modifizierten Polyisocyanaten und anderen Polyisocyanaten, wie sie in DE-A-2 920 501 (Seiten 12–16) beschrieben sind, z. B. Toluylendiisocyanaten, Diphenylmethandiisocyanaten, Naphthylen-1,5-diisocyanat, dimerem Toluylendiisocyanat oder Isophorondiisocyanat zu verwenden, wobei jedoch bevorzugt mindestens 50 Äquivalentprozent der Komponente A) erfindungsgemäß modifizierte Polyisocyanate sind.

Verwendet man Suspensionen der erfindungsgemäß modifizierten Polyisocyanate in höhermolekularen Polyhydroxy- und/oder höhermolekularen Polyamino-Verbindungen, so wird die Menge dieser höhermolekularen Verbindungen in der Suspension bevorzugt so gewählt, daß die Zusammensetzung bereits der gewünschten, Polyurethan-bildenden Rezeptur entspricht («Einkomponenten-Reaktivmischung»). Es können jedoch auch bei abweichender Zusammensetzung der Suspensionen noch weitere höhermolekulare Komponenten B) zur Polyurethanherstellung mitverwendet werden. Ebenso können gegebenenfalls auch bereits die Kettenverlängerungsmittel C) während der Umhüllungsreaktion in für Einkomponentensysteme geeigneten Mengen vorliegen; andernfalls kann C) als (weitere) Kettenverlängerungsmittel zugefügt werden.

Eine Ausführungsform der erfindungsgemäßen Verwendung besteht beispielsweise darin, daß man die Suspension der polyadduktumhüllten Polyisocyanate in solchen Mengen an höhermolekularen Verbindungen B) und gegebenenfalls niedermolekularen Verbindungen C) herstellt, daß ein Überschuß an Hydroxyl- bzw. Aminogruppen in der Suspension vorliegt und diese dann mit einem üblichen (nicht umhüllten) Polyisocyanat wie Toluylendiisocyanat, Diphenylmethandiisocyanat, Dicyclohexylmethandiisocyanat oder Isophorondiisocyanat, in solchen Mengenverhältnissen mischt, daß alle Hydroxyl- und Aminogruppen mit Isocyanatgruppen reagieren können.

Eine weitere Ausführungsform besteht darin, daß man das nicht umhüllte Polyisocyanat mit einem Überschuß an Hydroxy- und/oder Aminoverbindungen zu einem noch verarbeitbaren Vorprodukt mit OH– oder $NH_2$-Gruppen umsetzt und in diesem das bereits umhüllte oder zu umhüllende Polyisocyanat suspendiert.

Enthält hingegen die Suspension polyadduktumhüllter Polyisocyanate in den höhermolekularen Verbindungen und gegebenenfalls Kettenverlängerungsmitteln einen Überschuß an Isocyanatgruppen, so können der Suspension weitere höhermolekulare (B) bzw. niedermolekulare Verbindungen (C) zugemischt und die erhaltene Mischung zum Polyurethan umgesetzt werden.

Dies kann in den beiden geschilderten Fällen etwa dadurch erreicht werden, daß man die Polyisocyanatsuspension und die anderen Komponenten in getrennten Linien dosiert, vermischt und anschließend, z. B. in einer Form, thermisch aushärtet.

«DETA-Test» für die Charakterisierung der umhüllten Polyisocyanate («Aufdickungstemperatur»):

1 Mol des mit dem Amidin und/oder Guanidin modifizierten, festen Diisocyanats werden in 1000 g eines linearen Polyoxypropylenetherdiols des Molekulargewichts 2000 suspendiert. Nach Zusatz von 0,5 Mol 2,4-/2,6-(65/35) Diamino-3,5-diethyltoluol-Isomerengemisch (DETA) wird die Einkomponenten-Reaktivmischungssuspension mit einer Geschwindigkeit von etwa 10 °C/min aufgeheizt. Die Temperatur, bei der die Mischung rasch pastenartige Konsistenz unter Verfestigung annimmt, wird als «Aufdickungstemperatur» bezeichnet.

Eine Aufdickungstemperatur von weniger als 55 °C zeigt erfahrungsgemäß an, daß die betreffende Kombination aus festem Polyisocyanat und Amidin bzw. Guanidin in der vorliegenden Konzentration für eine Verwendung bei langzeitlagerstabilen Einkomponenten-PU-Reaktivsystemen wenig geeignet ist (jedoch z. B. bei Gießsystemen evtl. noch zu einer erwünschten Verlängerung der Gießzeit führen kann).

Erfindungsgemäß modifizierte Polyisocyanate, welche im «DETA-Test» bereits Aufdickungstemperaturen unter 55 °C zeigen, sind für Suspensionen in höhermolekularen Polyaminen wenig geeignet.

Die langzeitlagerbeständigen Einkomponenten-PU-Reaktivsysteme, die sich zu massiven oder geschäumten Polyurethanen härten lassen, werden bevorzugt durch in situ-Modifizierung der festen Polyisocyanate mittels der Amidine bzw. Guanidine sowie gegebenenfalls der oben genannten aminofunktionellen Verbindungen in Gegenwart der für das Einkomponenten-Polyurethan-System beabsichtigten höhermolekularen Polyol- und/oder Polyaminverbindungen B) sowie gegebenenfalls niedermolekularen Polyolen und/oder aromatischen Polyaminen als Kettenverlängerungsmitteln C) hergestellt. Hierbei wird das Modifizierungsmittel in der durch Vorversuche ermittelten geeigneten Konzentration in den höhermolekularen Polyolen oder Polyaminen bei vorzugsweise möglichst geringer Temperatur (Raumtemperatur) gelöst. Danach erfolgt die Zumischung des bei Raumtemperatur festen (pulverförmigen) Polyisocyanats, wobei sich innerhalb weniger Minuten das erfindungsgemäße umhüllte Polyisocyanat bildet. Vorher oder anschließend können noch die gegebenenfalls zuzusetzenden weiteren Komponenten, wie niedermolekulare Kettenverlängerungsmittel C), weitere höhermolekulare Polyhydroxyl- oder Polyamino-Verbindungen B), Katalysatoren D) und übliche Hilfs- und Zusatzstoffe E), der Suspension zugesetzt werden.

Wie bereits erwähnt, werden die erfindungsgemäßen, langzeitlagerbeständigen Einkomponenten-Reaktivsysteme vorzugsweise unter Mitverwendung von niedermolekularen Kettenverlängerern oder Vernetzern hergestellt (Komponente C)).

Bei diesen niedermolekularen Kettenverlängerern oder Vernetzern (Komponente C)) handelt es sich um zwei- oder mehrfunktionelle Verbindungen, welche an aliphatische und/oder cycloaliphatische Reste gebundene Hydroxylgruppen (Polyole) und/oder an aromatische, einschließlich heterocyclische Ringe mit aromatischem Charakter gebundene $NH_2$-Gruppen (Polyamine) und Molekulargewichte zwischen 62 und 399 aufweisen. Bevorzugt sind dabei niedermolekulare Diole mit an aliphatische oder cycloaliphatische Reste gebundenen Hydroxylgruppen, sowie aromatische Diamine des Molekulargewichtsbereichs 108 bis 399.

Diese Verbindungen weisen in der Regel 2 bis 8, vorzugsweise 2 bis 4, besonders bevorzugt jedoch 2, gegenüber Isocyanaten reaktionsfähige Wasserstoffatome wie Hydroxyl- und/oder Aminogruppen auf. Es können selbstverständlich auch Mischungen von verschiedenen Verbindungen des Typs C) verwendet werden. Als Beispiele für derartige Verbindungen seien genannt: Ethylenglykol, Trimethylenglykol, Butandiol-2,3 und/oder -1,4, Hexandiol-1,6, Neopentylglykol, 1,4-Bishydroxyethyl-cyclohexan, 1,4-Dihydroxycyclohexan, Terephthalsäure-bis(β-hydroxyethyl)ester, 1,4,3,6-Dianhydrohexite, 1,4-Monoanhydrotetrite, sowie weniger bevorzugt Diole mit sekundären Hydroxylgruppen, z. B. Propylenglykol, Butandiol-2,3, oder Pentandiol-2,5. Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl, sowie Di-, Tri- und Tetraethylen-, -propylen-, und -butylenglykole, ferner Bis-(2-hydroxyethyl)-hydrochinon, Bis-(2-hydroxyethyl)-resorcin, Formose oder Formit. Ferner sind geeignet tertiäraminhaltige Di- oder Polyole, z. B. N-Methyldiethanolamin, Triethanolamin oder N,N'-Bis-hydroxyethylpiperazin.

Bevorzugt werden jedoch anstelle von niedermolekularen Polyolen niedermolekulare aromatische Diamine eingesetzt. Unter aromatischen Polyaminen sollen auch solche Amine verstanden werden, welche die Aminogruppe an heterocyclische Reste mit aromatischem Charakter gebunden enthalten. Als aromatische Polyamine sind z. B. geeignet:
p-Phenylendiamin, 2,4-/2,6-Toluylendiamine,
Diphenylmethan-4,4'- und/oder -2,4'- und/oder -2,2'-diamine,
3,3'-Dichlor-4,4'-diaminodiphenylmethan,
3-($C_1$–$C_8$)-Alkyl-4,4'-diaminodiphenylmethane,
die 3,3'-Di-($C_1$–$C_4$)-4,4'-diaminodiphenylmethane
sowie die 3,3',5,5'-Tetra-($C_1$–$C_4$)-alkyl-4,4'-diphenylmethane,
die 4,4'-Diaminodiphenyl-sulfide, -sulfoxide oder -sulfone,
Ethergruppen aufweisende Diamine gemäß DE-A-1 770 525 und 1 809 172 (US-A-3 654 364 und 3 736 295), gegebenenfalls in 5-Stellung substituierte 2-Halogen-1,3-phenylendiamine (DE-A-2 001 772, 2 025 896 und 2 065 869), Bisanthranilsäureester (DE-A-2 040 644 und 2 160 590), 2,4-Diaminobenzoesäureester nach DE-A-2 025 900, sowie durch eine oder zwei ($C_1$–$C_4$)-Alkylgruppen substituierte Toluylendiamine. Besonders bevorzugt sind 3,5-Diethyl-2,4- und/oder -2,6-diaminotoluol (besonders ihre technischen (80/20)- oder (65/35)-Isomerengemische), unsymmetrisch tetraalkylsubstituierte Diaminodiphenylmethane, z. B. 3,5-Diethyl-3'-5'-diisopropyl-4,4'-diaminodiphenylmethan
und ihre Isomerengemische entsprechend DE-A-2 902 090, 4,4'-Diaminobenzanilid, sowie 3,5-Diaminobenzoesäure-($C_1$–$C_4$)alkylester, 4,4'- und/oder 2,4'-Diamino-diphenylmethan, sowie Naphthylen-1,5-diamin.

Es sind jedoch auch Diole oder Diamine mit zusätzlichen Gruppen einsetzbar, z. B. Adipinsäure-bis-(2-hydroxyethyl)-ester, Terephthalsäure-bis-(2-hydroxyethyl)-ester, Diol-urethane, Diolharnstoffe oder Polyole, welche Sulfonat- und/oder Phosphonatgruppen enthalten, z. B. 1,6-Hexamethylen-bis-(2-hydroxyethylurethan), 4,4'-Diphenylmethan-bis-(2-hydroxyethylharnstoff) oder das Addukt von Na-Bisulfit an Butendiol-1,4, bzw. dessen Alkoxylierungsprodukte. Weitere niedermolekulare Verbindungen C) werden ausführlich in der DE-A-2 854 384 beschrieben.

Ferner können in üblicher Weise gegebenenfalls gegenüber Isocyanaten monofunktionelle Verbindungen in Anteilen von 0,01 bis 10 Gew.-% als sogenannte Kettenabbrecher mitverwendet werden. Derartige monofunktionelle Verbindungen sind z. B. Monoamine, wie Butyl- oder Dibutylamin, Stearylamin, Pyrrolidin, Anilin oder Tolylamin, Butanol, 2-Ethylhexanol, Cyclohexanol oder Ethylenglykolmonoethylester.

Als Katalysatoren D) für die erfindungsgemäßen langzeitlagerstabilen Einkomponentensysteme können die üblichen Polyurethankatalysatoren, mit besonders gutem Effekt aber organische Blei- und/oder Zinnverbindungen verwendet werden, gegebenenfalls unter Mitverwendung weiterer üblicher Polyurethankatalysatoren, insbesondere von tert.-Amin-haltigen Katalysatoren.

Als organische Zinnverbindungen kommen Zinn-(II)-salze von Carbonsäuren wie Zinn-acetat, Zinn-octoat, Zinn-2-ethylhexanoat und Zinnlaurat, und die Zinn-(IV)-Verbindungen, z. B. Dibutylzinnoxid, Dibutylzinndichlorid, Dibutylzinndiacetat, Dibutylzinndilaurat, Dibutylzinnmaleat oder Dibutylzinndiacetat in Betracht.

Bevorzugt verwendet werden bei den Zinnkatalysatoren jedoch schwefelhaltige Zinnverbindungen wobei als Beispiele Di-(octyl)-zinn-(IV)-bis-thiomethyl oder Dimethyl-zinn-(IV)-bis-thiolauryl, ferner Dimethyl-zinn-bis-thioglykolsäurehexylester oder Dibutylzinn-bis-thioglykolsäure-octylester genannt seien. Selbstverständlich können die obengenannten Katalysatoren als Gemische eingesetzt werden, insbesondere dann, wenn die niedermolekularen Kettenverlängerer und die höhermolekularen Polyole gleichzeitig primäre und sekundäre OH-Gruppen tragen, bzw. wenn die H-aciden Verbindungen verschiedene Reaktivitäten aufweisen. Von Interesse sind auch Kombinationen der organischen Metallverbindungen mit Aminopyridinen, Hydrazinopyridinen (DE-A-2 434 185, 2 601 082 und 2 603 834), oder 1,4-Diazabicyclo-2.2.2-octan und/oder üblichen, tert.-Amin-Katalysatoren, wie sie in der Polyurethanchemie üblicherweise verwendet werden.

Die Bleikatalysatoren sind dabei von besonderer Wirksamkeit, wenn in dem System Polyetherpolyole mit sekundären Hydroxylgruppen, z. B. Polypropylenoxidglykole, verwendet werden. Bei Einsatz von Uretdiondiisocyanaten kann insbesondere bei Bleikatalysatoren auch eine zusätzliche Vernetzung infolge Spaltung des Uretdionringes erfolgen, wobei verzweigende Allophanatgruppen oder bei vollständiger Spaltung des Uretdionrings zusätzliche Urethangruppen gebildet werden.

Bei Einsatz von (Polyester)polyolen mit im wesentlichen primären Hydroxylgruppen sind dagegen die Zinnverbindungen, besonders die Zinn/Schwefel-Katalysatoren, von besonderer Wirksamkeit. Bei aromatische $NH_2$-Gruppen enthaltenden Polyethern kann zumeist auf eine Katalyse völlig verzichtet werden. Die Katalysatoren werden in der Regel in einer Menge von 0,001 bis 5 Gew.-%, vorzugsweise von 0,01 bis 2 Gew.-%, bezogen auf A) + B), eingesetzt.

Als gegebenenfalls einzusetzende Hilfs- und Zusatzstoffe E) seien genannt: Farbstoffe oder Pigmente, Füllstoffe wie Silicagel, Gips, Talkum, Aktivkohle, Metallpulver, UV-Absorptionsmittel oder Stabilisatoren wie phenolische Antioxidan-

tien, Lichtschutzmittel, Treibmittel, wie $CO_2$ oder Fluordichlor-alkane, oberflächenaktive Zusatzstoffe wie Emulgatoren oder Schaumstabilisatoren, gegebenenfalls Zellregler, Antiblockmittel, Silikone, Flammschutzmittel oder fungistatisch und/oder bakteriostatisch wirkende Substanzen.

Als Füllstoffe sind z. B. Fasermaterialien, d. h. alle an sich bekannten anorganischen und/oder organischen, faserförmigen Verstärkungsmaterialien einsetzbar, z. B. Glasfasern, vorzugsweise in Längen zwischen 20 + 60 mm, Graphitfasern und Asbestfasern oder Fasermaterialien, die von einem organischen Polymeren stammen, z. B. von einem Polyester wie Polyethylenterephthalat, oder vorzugsweise aromatischen Polyamiden, wie dem m-Phenylen/Isophthalsäurepolyamid, oder dem Poly-p-phenylen-terephthalamid, oder auch Polycaprolactam. Diese Fasermaterialien können auch als Matte, Band, durchgehende Fasern, Vlies, Stoff oder als Stapelfaserwirrgemisch vorliegen. Bevorzugt sind Glasfasern, die mit Schlichten ausgerüstet sind, um den Fasern eine Affinität zur Polyurethanen zu verleihen. Die einzubauende Füllstoffmenge hängt von der gewünschten Verbesserung der mechanischen Eigenschaften ab, im allgemeinen werden 5 bis 60 Gew.-% Fasermaterial angewendet.

Das $NCO/(NH_2+OH)$-Äquivalentverhältnis (Summe aus freien und mit Amidin umgesetzten NCO-Gruppen) in den erfindungsgemäßen Einkomponenten-Reaktivsystemen beträgt in der Regel 0,5 : 1 bis 1,5 : 1, bevorzugt 0,8 : 1 bis 1,5 : 1, besonders bevorzugt 0,95 : 1 bis 1,2 : 1.

Pro $(OH+NH_2)$-Äquivalent an höhermolekularen Polyolen und/oder Polyaminen B) werden dabei in der Regel 0,3 bis 10, bevorzugt 0,5 bis 8, und besonders bevorzugt 0,75 bis 5 Äquivalente an $(OH+NH_2)$-Äquivalenten an Kettenverlängerungsmitteln C), d. h. niedermolekularen Polyolen oder niedermolekularen Polyaminen, in den Polyurethan-Reaktiv-Mischungen eingesetzt.

Uretdionringe enthaltende (dimere) Diisocyanate können im allgemeinen als Diisocyanate betrachtet werden, so daß nur die freien NCO-Gruppen berücksichtigt werden. Unter bestimmten Versuchsbedingungen (Verwendung von Bleikatalysatoren, höhere Verarbeitungstemperatur, z. B. > 140 °C) greift der Uretdionring jedoch mit in die Reaktion ein (zusätzliche Verknüpfungsstellen über Allophanat- oder Biuretgruppen), so daß die latenten NCO-Gruppen des Uretdionrings bei der Berechnung der obigen Äquivalentverhältnisse mitberücksichtigt werden müssen.

Je nach Viskosität bzw. Schmelzverhalten der Ausgangskomponenten erhält man bei Raumtemperatur gut gießbare, rakelfähige oder auch feste, leicht aufschmelzbare Einkomponenten-PU-Reaktivmischungen. Die Hitzevernetzung dieser Mischung erfolgt in der Regel erst nach Zugabe geeigneter Katalysatoren D). Ohne diese Katalysatoren werden insbesondere bei Verwendung von Polyolen als höhermolekulare Verbindungen B) oder Kettenverlängerungsmittel C) unbefriedigende Eigenschaften der Polyurethanformkörper erhalten. Bei alleiniger Verwendung der gegenüber NCO-Gruppen deutlich reaktiveren aromatischen Polyaminverbindungen kann jedoch auf einen Zusatz von Katalysatoren verzichtet werden.

Die erfindungsgemäßen Einkomponenten-PU-Reaktivsysteme beginnen erst nach Erreichen einer (von Menge und Art des Amidins bzw. Guanidins abhängigen) Temperatur innerhalb weniger Minuten zu vernetzen. Das bedeutet, daß einerseits unterhalb dieser «Aufdickungstemperatur» die noch unvernetzte Reaktivmischung ein völliges Ausfüllen der heißen Werkzeugform erlaubt, andererseits aber die folgende rasche Verfestigung nach Temperaturerhöhung schnelle Entformungszyklen gestattet. Ein wesentlicher Vorteil der erfindungsgemäßen Einkomponentensysteme besteht darin, daß man in diesen Systemen auch aromatische Diamine, wie z. B. 4,4'-Diaminodiphenylmethan, 2,4- oder 2,6-Diaminotoluol, 3,5-Diethyl-2,4/2,6-(65/35)-diaminotoluol, 1,5-Diaminonaphthalin oder 3,5-Diethyl-3',5'-diisopropyl-4,4'-diamino-diphenylmethan mitverwenden kann, ohne deren Lagerstabilität zu beeinträchtigen. Werden dagegen derartige Diamine in einer der bisher üblichen Verfahrenstechniken mit NCO-Prepolymeren umgesetzt, so resultieren extrem kurze Gießzeiten, so daß ein einwandfreier Verlauf der Ansätze im Werkzeugteil nicht möglich ist.

Durch die Verwendung von höhermolekularen Polyaminen in dem Einkomponentensystem lassen sich Polyurethan(harnstoffe) mit deutlich günstigeren Eigenschaften (z. B. höheren Festigkeiten, höheren Spannungswerten, höherer Härte und höheren Erweichungsbereichen) erzielen als mit höhermolekularen Polyolen alleine.

Die erfindungsgemäßen Einkomponentensysteme werden im wesentlichen durch Hitzestoß verfestigt. Bei Raumtemperatur oder wenig erhöhter Temperatur tritt auch in Gegenwart stark wirksamer Katalysatoren überraschenderweise keine Vernetzungsreaktion ein, so daß auch katalysatorhaltige Mischungen langzeitlagerstabil sind.

Die Verarbeitung der erfindungsgemäßen Einkomponentensysteme richtet sich nach deren Beschaffenheit. Flüssige, bei Raumtemperatur gießbare Systeme lassen sich im Gießprozeß verarbeiten; gegebenenfalls werden sie vor der Verarbeitung kurz erwärmt, z. B. auf 50–70 °C. Die Verarbeitung kann auch im Schleuderguß erfolgen; Hohlkörper können durch Einbringung der Reaktivmasse in beheizte Formen unter Verteilung an der Oberfläche durch entsprechende Rotationsbewegungen hergestellt werden.

Nach dem slush-molding-Process können beheizte Formen mit der Reaktivmasse gefüllt werden, wobei nach einer gewissen Reaktionszeit an der beheizten Formoberfläche überschüssige, noch nicht reagierte Reaktionsmasse aus den Formen wieder ausgegossen wird.

Bei Mitverwendung von Treibmitteln können zellige Polyurethane hergestellt werden, die gegebenenfalls eine integrale Dichtestruktur aufweisen.

Nicht mehr gießbare, aber noch verlaufende Systeme können z. B. mit einer Rakel auf Unterlagen, wie z. B. Vliese, Gewirke und Gewebe, (Spalt)leder, Matrizen (z. B. Veloursleder-Silikon-Matrizen) oder Zwischenträger (z. B. Trennpapiere), unter Bildung von Beschichtungen oder Zurichtungen, aufgebracht und anschließend durch Hitzestoß verfestigt werden.

Plastische Systeme (Pasten) können unter Druck- und Formgebung in der Hitze verpreßt werden, wobei bei 120 °C bereits 5 bis 15 Minuten zur Verfestigung ausreichend sind.

Auch durch Tauchverfahren können Oberflächenbeschichtungen, Abdruckformen oder Formkörper hergestellt werden, indem man die beheizten, zu beschichtenden Formen in die Reaktivmasse eintaucht.

Die Reaktivmasse kann auch durch Schlitze oder Düsen in heiße Medien (Heißluft oder heiße Flüssigkeiten) ausgepreßt und dadurch verfestigt werden.

Die Reaktivmasse kann in beheizten Extrudern teilweise oder weitgehend zum Polyurethan reagiert werden und in dieser Form durch Schlitze oder Düsen extrudiert und gegebenenfalls in heißen Medien vollständig ausreagiert werden, oder in heiße Formen eingebracht werden, woraus sie nach kurzer Zeit entformt werden kann. Auch nach dem Reaktionsspritzgußverfahren (reaction-injection-molding – RIM) kann die Reaktivmasse verarbeitet werden.

Feste Systeme, insbesondere auf Basis höherschmelzender Polyole B) (45 bis 65 °C) werden entweder unter Druck und Formgebung (Spritzguß) oder etwa bei oder oberhalb der Schmelztemperatur des Polyols verarbeitet. Man kann so verfahren, daß man die vorher hergestellten Einkomponentensysteme in Form fester Granulate in eine über den Schmelzpunkt des Polyols aufgewärmte Form (im allgemeinen 70 °C) einbringt. Nach dem Aufschmelzen der Granulate wird die Form auf 100 bis 120 °C erwärmt und der Inhalt verfestigt.

Die Verfestigungstemperatur der erfindungsgemäßen Einkomponentensysteme ist von Menge und chemischer Konstitution der Amidine stark abhängig. Mit zunehmender Verfestigungstemperatur nimmt die aufzuwendende Verfestigungszeit zur Bildung der Polyurethane ab. Die Ausheizdauer kann je nach Temperatur von weniger als 1 Minute bis zu mehreren Stunden betragen. Manchmal ist es vorteilhaft, die Kunststoffe nach Entformen noch einige Zeit bei 100 °C zu tempern, um eine vollständige Durchhärtung zu gewährleisten.

Eine Aushärtung der Einkomponenten-Reaktivsysteme kann jedoch auch durch Zugabe von vorzugsweise hochpolaren Lösungsmitteln wie Dimethylformamid, N-Methyl-pyrrolidon, oder mäßig polaren Lösungsmitteln (Dielektrizitätskonstanten > 5, vorzugsweise > 10) wie Propylencarbonat, Dioxan oder Glykolmonomethyletheracetat erfolgen. Die Gießzeit (Topfzeit) der Ansätze kann dabei durch die Menge des Lösungsmittelzusatzes gesteuert werden. Bei geringen Mengen erhält man Systeme mit mehrtägiger Topfzeit bei Raumtemperatur, während bei höheren Dosierungen des Lösungsmittels bereits nach 10 bis 15 Minuten oder sogar schlagartig Verfestigung eintritt. Die erforderliche Menge an Lösungsmitteln ist von der Menge und Art des Amidins (Güte der Polyadduktaut an der Isocyanatoberfläche) abhängig und kann durch einfache Vorversuche für das jeweilige System bestimmt werden. Der technische Vorteil dieser Arbeitsweise liegt darin, daß man das Reaktivsystem auch ohne Zufuhr von Wärme verfestigen kann. Selbstverständlich ist es aber durch geeignete Dosierung der Lösungsmittel auch möglich, die thermische Verfestigungszeit der Einkomponentensysteme zu erniedrigen, dabei jedoch noch eine ausreichende Lagerstabilität des Gemisches zu erhalten.

Weiterhin kann eine Verfestigung der erfindungsgemäßen Einkomponentensysteme auch durch Anwendung hoher Scherkräfte herbeigeführt werden, so z. B. in hochtourigen Rührwerden. Durch mechanische Beanspruchung während des Rührprozesses wird dabei die auf der Isocyanatteilchenoberfläche befindliche Polyadduktthülle zerstört.

Beispiel 1

Modifizierung von dimerem Toluylen-2,4-diisocyanat mittels eines Amidins in einem höhermolekularen aromatischen Aminopolyether; Bestimmung des Aufdickungspunktes der Mischungen

a) Herstellung des höhermolekularen Polyamins (als Ausgangsmaterial B))

1 Mol eines linearen Polypropylenetherglykols der OH-Zahl 56 und 2 Mol Toluylen-2,4-diisocyanat werden durch 4-stündiges Erhitzen auf 80 °C in ein NCO-Prepolymer (3,58% NCO) überführt. Dazu werden 810 g des 45 °C warmen NCO-Prepolymers unter intensivem Rühren so zu einer gekühlten Lösung von 52,2 g Kaliumhydroxid und 500 ml Wasser und 300 ml Aceton gegeben (NCO : $OH^{\ominus}$-Verhältnis = 1 : 1,35), daß eine Innentemperatur von 25 °C nicht überschritten wird. 30 Minuten wird bei dieser Temperatur weitergerührt und dann 2 Stunden zum Rückfluß erhitzt. Nach 30-minütigem Stehen wird die untere, wäßrige Salzlösung aus dem zweiphasigen Reaktionsgemisch abgetrennt und verworfen. Die obere Phase wird bei 20 mbar/80 °C und dann bei 1 mbar/100 °C von Wasser- und Acetonresten befreit. Durch Absaugen des 60 °C warmen Produkts über eine Drucknutsche (3 bar Überdruck) werden geringe Reste Salz abgetrennt und das Polyetheramin mit einer NH-Zahl von 47,4 isoliert.

b) Erfindungsgemäßes Verfahren

100 g des oben beschriebenen aromatischen Aminopolyethers wurden die unten angegebenen Mengen an Amidin bzw. Guanidin zugefügt. Danach wurden 17 g des dimeren Toluylen-2,4-diisocyanats in Form eines feingemahlenen Pulvers (10 bis 30 µm) in einem hochtourigen Mischgerät einsuspendiert. Die jeweiligen Reaktionsmischungen wurden dann auf eine Kofler-Heizbank erwärmt. Als «Aufdickungstemperatur» ist diejenige

Temperatur definiert, bei der die Reaktionsmischung elastisch zu vernetzen beginnt. Sie ist unter anderem von der Menge und der Art des Amidins bzw. Guanidins und der Art des Polyisocyanates abhängig.

Die Aufdickungstemperaturen (°C) sind in der nachstehenden Tabelle für jeweils 2,76 und 5,52 Äquivalent % Amidin bzw. Guanidin, bezogen auf Gesamtmenge der NCO-Gruppen im dimeren TDI, angegeben:

| Amidin bzw. Guanidin | 2,76 Äq.-% | 5,52 Äq.-% |
|---|---|---|
| 1. – | Vernetzung nach wenigen Stunden bei RT. | |
| 2. 1,2-Dimethyltetrahydropyrimidin | 70° | 110° |
| 3. 1-Methyl-2-cyclohexyl-tetrahydropyrimidin | 65° | 75° |
| 4. N-(3-Dimethylaminopropyl)-2-methyl-tetrahydropyrimidin | 60° | 60° |
| 5. 1,5-Bis-(2-methyl-tetrahydropyrimidinoyl-1)-3-methyl-3-azapentan | 70° | 95° |
| 6. Diaza-bicylo-undecen | 60° | 70° |
| 7. Diazabicyclononen | 65° | 85° |
| 8. 1-Hydroxyethyl-imidazolin | 90° | 45° (Vergleich) |
| 9. Tetramethylguanidin | 50° | 65° |
| 10. 1,5,7-Triaza-7-benzyl-bicyclo-[4,4,0]-dec-5-en | 60° | 95° |
| 11. 1,4,6-Triaza-6-N-butyl-bicyclo-[3,3,0]-oct-4-en | 75° | 105° |
| 12. 1,5,7-Triaza-7-N-cyclohexyl-bicyclo-[4,4,0]-dec-5-en | 110° | 145° |

## Beispiel 2

Mitverwendung von niedermolekularen H-aktiven Verbindungen

Werden einigen 2,76 Äquivalent % Amidin enthaltenden Reaktionsansätzen gemäß Beispiel 1 jeweils 0,5 g Wasser, 1,5 g Ethylenglykol und/oder 0,05 g Ethylendiamin zugemischt, so erhöhen sich die Aufdicktemperaturen (siehe Tabelle).

| Amidin bzw. Guanidin | (vgl. Bsp.1) – ohne weitere Zusätze – | 0,5 Wasser | 1,5 g Ethylenglykol | 0,05 g Ethylendiamin |
|---|---|---|---|---|
| 1. 1,2-Dimethyl-tetrahydropyrimidin | 70° | 92 | 115 | 135 |
| 2. 1-Methyl-2-cyclohexyl-tetrahydropyrimidin | 65° | 70 | 105 | 140 |
| 3. N-(3-Dimethylaminopropyl)-2-methyl-tetrahydropyrimidin | 60° | 75 | 115 | 135 |
| 4. 1,5-Bis-(2-methyltetrahydropyrimidoyl-1)-3-methyl-3-azapentan | 70° | 105 | 130 | 145 |
| 5. Diazabicyclo-undecen | 60° | 70 | 120 | 135 |
| 6. Diazabicyclo-nonen | 65° | 75 | 125 | 135 |

## Beispiel 3

Polyurethan-Elastomere

In 100 g des in Beispiel 1 genannten linearen Aminopolyethers (NH-Zahl = 47) werden die Amidine 1 bis 6 in der angegebenen Menge gelöst. Darauf erfolgt Zusatz von 26,4 g fein gemahlenem, dimeren Toluylendiisocyanat (TT) und anschließend wird mit 15,0 g 3,5-Diethyl-2,4/2,6-diaminotoluol-Isomerengemisch vermischt. Diese bei Raumtemperatur lagerstabilen Reaktionsansätze werden nach dem Entgasen bei Raumtemperatur oder leicht erhöhter Temperatur (30 bis 40 °C) in eine kalte oder vorgewärmte Gießform gefüllt und anschließend bei 120° ausgeheizt. Nach einer Verfestigungszeit von ½ bis 1 Stunde werden Polyurethan-Elastomere mit den in der nachstehenden Tabelle angegebenen mechanischen Eigenschaften erhalten.

Folgende Amidine werden verwendet:

1. 1,2-Dimethyl-tetrahydropyrimidin
2. 1-Methyl-2-cyclohexyl-tetrahydropyrimidin
3. N-(3-Dimethylaminopropyl)-2-methyl-tetrahydropyrimidin
4. Diazabicyclo-undecen
5. Diazabicyclo-nonen
6. Tetramethylguanidin

| Amidin; Nr. | 1 | 2 | 3 | 4 | 5 | 6 |
|---|---|---|---|---|---|---|
| Menge (g) | 0,2 | 0,2 | 0,3 | 0,2 | 0,25 | 0,25 |
| Aufdickungstemperatur (°C) | 65 | 60 | 90 | 60 | 60 | 50 |
| Zugfestigkeit (MPa) | 13,8 | 8,9 | 11,3 | 9,3 | 22,5 | 5,5 |
| Bruchdehnung (%) | 320 | 150 | 210 | 150 | 350 | 75 |
| Weiterreißfestigkeit (N/cm) | 480 | 370 | 400 | 320 | 490 | 100 |
| Elastizität (%) | 40 | 38 | 38 | 36 | 40 | 32 |
| Härte (Shore A) | 94 | 96 | 96 | 94 | 97 | 91 |
| Härte (Shore D) | 48 | 49 | 48 | 43 | 53 | 40 |

Beispiel 4

Einer Lösung von 1,0 g 1,2-Dimethyl-tetrahydropyrimidin in 100 ml Petrolether werden 50 g feingepulvertes, dimeres TDI zugesetzt. Die Suspension wird bei Raumtemperatur ca. 1 Stunde gerührt. Danach wird abgesaugt und der Filterkuchen nochmals mit Petrolether gewaschen. Nach dem Trocknen werden 16 g dieses desaktivierten Polyisocyanates mit 100 g des in Beispiel 1 beschriebenen Aminopolyethers verrührt. Die Reaktionsmischung bleibt bei Raumtemperatur lagerstabil und zeigt auf der Kofler-Bank eine Aufdikkungstemperatur von 60°. Nach ½-stündigem Ausheizen der Mischung bei 120 °C erhält man einen hochelastischen Kunststoff mit einer Härte von ca. 90 Shore A.

Beispiel 5

Das in Beispiel 4 genannte dimere TDI wird durch 50 g 4,4'-Dimethyl-3,3'-diisocyanato-diphenylharnstoff ersetzt; das so erhaltene desaktivierte Polyisocyanat wird mit 100 g Aminopolyether abgemischt (Verhältnis 100 : 16). Auch dieser Ansatz ist bei Raumtemperatur monatelang stabil, vernetzt aber bei 120 °C innerhalb kurzer Zeit zu einem hochelastischen Kunststoff. Die Aufdikkungstemperatur der flüssigen und gut gießbaren Mischung liegt bei 80 °C.

Beispiel 6

a) Vergleichsversuch:

In eine Mischung von 100 g des in Beispiel 1 beschriebenen Aminopolyethers und 15 g 3,5-Diethyl-2,4-diaminotoluol werden 26,4 g dimeres TDI eingerührt. Nach raschem Entgasen im Vakuum wird die Reaktionsmischung in eine Form gegossen und 1 Stunde bei 120 °C ausgeheizt. Man erhält ein hartes Polyurethanmaterial, das jedoch noch ritzbar ist und auf Zugbeanspruchung zerbricht. Die Reaktionsmischung ist schon bei Raumtemperatur nicht lagerstabil. Es erfolgt eine kontinuierliche Viskositätserhöhung und nach kurzer Zeit beginnt der Ansatz sich zu verfestigen.

b) Erfindungsgemäßes Verfahren:

Werden dagegen vor der Zugabe von dimerem TDI 0,3 g 1,2-Dimethyltetrahydropyrimidin eingerührt, so bleibt die Reaktionsmischung bei Raumtemperatur lagerstabil (Aufdickungstemperatur: 90 °C). Die Hitzeverfestigung bei 120 °C führt zu einem harten elastischen Polyurethanmaterial mit folgenden mechanischen Eigenschaften:

| | |
|---|---|
| Zugfestigkeit (MPa): | 18,5 |
| Bruchdehnung (%): | 250 |
| Weiterreißfestigkeit (N/cm): | 510 |
| Elastizität (%): | 40 |
| Härte (Shore D): | 55 |

Beispiel 7

a) Vergleichsversuch:

In eine Lösung von 8,9 g 3,5-Diethyl-2,4-diaminotoluol in 100 g eines linearen Polypropylenetherdiols (Molekulargewicht 2000, OH-Zahl 56) werden 34,8 g dimeres TDI eingerührt und die Mischung auf 120 °C erwärmt. Nach ca. 1 Stunde erhält man ein noch nicht durchreagierendes und noch nicht ritzbares Polyurethanmaterial, das bei Druckbeanspruchung zerbricht. Die Ausgangsmischung ist bei Raumtemperatur nicht lagerstabil. Bereits nach kurzer Zeit erfolgt Aufdickung zu einer zähen Paste.

b) Erfindungsgemäßes Verfahren:

Werden der oben beschriebenen Reaktionsmischung vor der Zugabe des dimeren TDI. 0,15 g 1,2-Dimethyl-tetrahydropyrimidin zugesetzt, so bleibt der Ansatz bei Raumtemperatur lagerstabil (Aufdickungstemperatur 60 °C) und man erhält nach 1-stündigem Ausheizen bei 120 °C ein völlig durchreagiertes, hochelastisches Polyurethanmaterial.

Beispiel 8

100 g des in Beispiel 1 genannten linearen Aminopolyethers werden 8 g 2,4-Diisocyanatotoluol (Vergleichsversuch) bzw. 11,5 g geschmolzenes 4,4'-Diisocyanatodiphenylmethan (Vergleichsversuch) bzw. 16 g des festen Polyisocyanats 4,4'-Dimethyl-3,3'-diisocyanato-diphenylharnstoff (erfindungsgemäß) sowie unterschiedliche Mengen an Amidin (1,2-Dimethyltetrahydropyrimidin) zugefügt.

| Isocyanat | Amidin (g) | Viskosität nach 5 Min. | (mPa.s/25 °C) nach 10 Min. | Verfestigungszeit/Min. |
|---|---|---|---|---|
| Vergleichsversuche | | | | |
| 2,4-Diisocyanatotoluol | – | 48.000 | 105.000 | 30 |
| 2,4-Diisocyanatotoluol | 0,1 | 60.000 | 250.000 | 15 |
| 4,4'-Diisocyanatodiphenylmethan | – | | | 7 |
| 4,4'-Diisocyanatodiphenylmethan | 0,1 | | | 3 |
| TDI-Harnstoffdiisocyanat | – | | | kontinuierliche Viskositätserhöhung nach einigen Stunden Vernetzung |
| erfindungsgemäß | | | | Aufdickungstemperatur |
| TDI-Harnstoffdiisocyanat | 0,1 | | | 70 °C |
| TDI-Harnstoffdiisocyanat | 0,2 | | | 80 °C |
| TDI-Harnstoffdiisocyanat | 0,3 | | | 95 °C |

Entsprechend den Literaturangaben ist im Falle von TDI und MDI bei Zusatz des Amidins ein deutlicher katalytischer Effekt auf die $NCO/NH_2$-Reaktion ersichtlich. Ein völlig anderes Bild ergibt die Reaktion des Aminopolyethers mit dem festen Polyisocyanat. Hier genügen bereits geringe Mengen des Amidins, um den Reaktionsansatz bei Raumtemperatur lagerstabil zu halten, d. h. die $NCO/NH_2$-Reaktion praktisch völlig zu unterbinden. Eine erhöhte Amidinmenge führt – im Gegensatz zu üblichen Katalysatoreffekten – zu einer weiteren Retardierung der Reaktivität des Polyisocyanates, wie aus der Erhöhung der Aufdickungstemperatur ersichtlich ist.

Beispiel 9

500 g des in Beispiel 1 genannten linearen Aminopolyethers werden 1,5 g 1-Methyl-2-cyclohexyl-tetrahydropyrimidin zugemischt. Anschließend werden 90 g des feingemahlenen (Teilchengröße 10–30 µm) 4,4'-Dimethyl-3,3'-diisocyanato-diphenylharnstoffs (TDIH) eingetragen. Man erhält eine bei Raumtemperatur gut lagerstabile Suspension (Aufdickungstemperatur der Mischung: 75 °C). Nach Ausheizen des Ansatzes bei 120 °C (30–60 Minuten) und 1-stündigem Nachtempern der Formlinge erhält man ein elastisches Material mit folgenden Eigenschaften:

| | |
|---|---|
| Zugfestigkeit (MPa): | 15,2 |
| Bruchdehnung (%): | 380 |
| Weiterreißfestigkeit (N/cm): | 415 |
| Elastizität (%): | 40 |
| Härte (Shore A): | 80 |

Bei einer Ausheiztemperatur von 150–170 °C kann die Entformung der Teile aus dem Werkzeug bereits nach wesentlich kürzeren Verfestigungszeiten erfolgen. Bei einer Schichtdicke von ca. 1 bis 1,5 cm ist die Entformung bereits nach 2–3 Minuten möglich.

Beispiel 10

Einer Mischung von 100 g eines trifunktionellen Polyoxypropylen-polyoxyethylenetherpolyols (Verhältnis der Oxypropylen/Oxyethylenanteile 80/20; OH-Zahl 28, Molekulargewicht 6000) und 25 g 3,5-Diethyl-2,4-diaminotoluol werden 0,5 g 1,2-Dimethyl-tetrahydropyrimidin zugesetzt. Danach erfolgt Zugabe von 30 g feingepulvertem, dimerem TDI. Der Reaktionsansatz ist bei Raumtemperatur lagerstabil und zeigt eine Aufdickungstemperatur von 70 °C. Nach einer Ausheizphase von 30 bis 60 Minuten bei 120 °C erhält man harte, zähelastische Formkörper mit folgenden Eigenschaften (siehe Spalte I in der Tabelle).

Werden obigem Ansatz noch 0,1 g Dibutylzinn(IV)-dilaurat zugesetzt, so verbessert sich bei den ausgeheizten Probekörpern insbesondere die Bruchdehnung, sowie in geringerem Maße auch die Zugfestigkeit (siehe Werte Spalte II).

| | I | II |
|---|---|---|
| Zugfestigkeit (MPa): | 12,5 | 15,5 |
| Bruchdehnung (%): | 320 | 425 |
| Weiterreißfestigkeit (N/cm): | 420 | 410 |
| Elastizität (%): | 40 | 40 |
| Härte (Shore D): | 47 | 48 |

Beispiel 11

Oberflächenmodifizierung mit Amidinsalz

a) In eine Lösung von 11,2 g 1,2-Dimethyl-tetrahydropyrimidin in 60 ml Diethylether wird eine Mischung von 6 g Essigsäure und 20 g Diethylether eingetropft. Das essigsaure Amidinsalz scheidet sich als fester, feinkristalliner Niederschlag ab, der nach Waschen mit Ether einen Schmelzpunkt von 55–60 °C zeigt.

b) 0,15 g dieses Amidinsalzes werden 100 g des in Beispiel 1 beschriebenen Aminopolyethers zugesetzt, danach werden 16 g dimeres TDI eingerührt. Die Mischung ist bei Raumtemperatur lagerstabil und zeigt eine Aufdickungstemperatur von 75–80 °C. Nach kurzzeitigem Ausheizen bei 120 °C erhält man ein elastisches Polyurethan mit einer Härte von 90 Shore A.

c) Werden 0,15 g des Amidinsalzes einer Lösung von 100 g eines linearen Polypropylenetherdiols mit einem Molekulargewicht 2000 und 8,9 g 3,5-Diethyl-2,6-diaminotoluol zugesetzt, so erhält man nach Zugabe von 34,8 g dimerem TDI eine Reaktionsmischung, die eine Aufdickungstemperatur von nur 40–50 °C aufweist. Diese Mischung ist bei Raumtemperatur nicht unbegrenzt lagerstabil. Es erfolgt eine allmähliche Viskositätserhöhung zu einer Paste. Die bei 120 °C durchgeführte Hitzevernetzung ergibt ein brüchiges Polyurethanmaterial und erst nach Zugabe von 0,1 g Dibutyl-zinn(IV)-dilaurat zur Reaktionsmischung und anschließendem Ausheizen bei 120 °C erhält man einen elastischen Formkörper. Dies zeigt, daß das Amidinsalz (im Gegensatz zum freien Amidin) in diesem Fall eine nur unzureichende Retardierung der Reaktivität des Polyisocyanats und eine nur unzureichende katalytische Wirkung bei der Härtungsreaktion besitzt.

Beispiel 12

a) Das analog Beispiel 11a) hergestellte Amidinsalz aus Diazabicyclo-nonen und Ameisensäure schmilzt bei 60–65 °C.

b) Die gemäß Beispiel 11b) hergestellte Mischung mit 0,3 g des Amidin/Ameisensäuresalzes 12a) ist lagerstabil und zeigt eine Aufdickungstemperatur von 80 °C. Durch Aushärten bei einer Vernetzungstemperatur von 120 °C erhält man einen elastischen Formkörper.

c) Die gemäß Beispiel 11c) hergestellte Mischung mit 0,3 g des Amidin/Ameisensäuresalzes 12a) ist bei Raumtemperatur ebenfalls nicht unbegrenzt lagerstabil (Aufdicktemperatur 40–50 °C). Auch hier kann erst durch Zusatz von 0,1 g Dibutyl-zinn(IV)-dilaurat eine einwandfreie Verfestigung zu einem Elastomeren erreicht werden.

Beispiel 13

200 g eines bei 50–60 °C aufgeschmolzenen Polyesters aus Adipinsäure und Ethylenglykol (Molekulargewicht 2000) werden 0,3 g Dimethyl-tetrahydropyrimidin und 0,1 g Ethylendiamin zugesetzt. Anschließend werden 64 g TDIH in Form eines feingemahlenen Pulvers und danach 17,8 g 3,5-Diethyl-2,4-diaminotoluol eingerührt. Nach kurzem Entgasen wird die Schmelze in eine Form gegossen, die bei 120 °C ausgeheizt wird. Nach einer Verfestigungszeit von ca. 15 Minuten und ca. 1–2 Stunden Nachheizdauer des Formlings bei 120 °C wird ein elastisches Material mit folgenden mechanischen Eigenschaften erhalten:

| | |
|---|---|
| Zugfestigkeit (MPa): | 35,8 |
| Bruchdehnung (%): | 570 |
| Weiterreißfestigkeit (N/m): | 630 |
| Elastizität (%): | 45 |
| Härte (Shore A): | 92 |

Heizt man die Schmelze nicht zum Polyurethan aus, sondern läßt das Reaktionsgemisch bei ca. 50 °C wieder erkalten, so wird eine lagerstabile Einkomponentenmischung in Form fester Granulate erhalten.

Nach beliebig langer Zeit können diese Systeme in eine auf ca. 70–100 °C geheizte Form gebracht werden. Nach dem Aufschmelzen (60–80 °C) verteilt sich die nunmehr dünnflüssige Schmelze innerhalb der Form, wobei die Fließcharakteristik von der Formtemperatur bestimmt wird. Die Endaushärtung erfolgt schließlich bei einer Temperatur von 110–120 °C.

Man kann daher diese Einkomponentensysteme im Gießverfahren verarbeiten, wenn die Verarbeitungstemperatur oberhalb der Schmelztemperatur des Polyesters liegt. Zu diesem Zweck empfiehlt es sich, die lagerstabile Reaktionsmischung vor der Verarbeitung aufzuschmelzen (50–70 °C), zu entgasen, anschließlich in vorgewärmte Formwerkzeuge zu gießen und die Formen bei 110–120 °C auszuheizen. Nach wenigen Minuten Verfestigungszeit und 30–60 Minuten Temperzeit sind die hochelastischen Elastomeren entformbar.

Beispiel 14

200 g eines linearen Polyesters aus Adipinsäure und Butandiol-(1,4), der ca. 1% Wasser enthält, werden bei etwa 50 °C 0,25 g Diazabicyclononen und 0,075 g Ethylendiamin zugesetzt. Danach erfolgt Zugabe von 40 g dimerem TDI und anschließend von 17,8 g 3,5-Diethyl-2,4-diaminotoluol. Die Reaktionsmischung zeigt eine Aufdickungstemperatur von etwa 115 °C und ist daher bei Raumtemperatur oder leicht erhöhten Temperaturen lagerstabil. Nach der Verfestigung der Reaktivmischung bei 120–130 °C erhält man in kurzer Zeit einen feinporigen, zähelastischen Schaumstoff mit einem Raumgewicht von ca. 400 g/l.

Beispiel 15

Ein Gemisch aus 100 g des aromatischen Polyetherdiamins nach Beispiel 1 und 0,6 g eines Polyethersiloxanblockcopolymeren wird mit 0,15 g 1,2-Dimethyl-tetrahydropyrimidin versetzt. Anschließend werden 17 g TDIH mit einem Schnellrührer eingemischt. Es wird eine lagerstabile Suspension erhalten. Durch diese Suspension wird 2,5 Stunden lang ein kräftiger Luftstrom geleitet, um eine cremige Suspension zu erhalten. 590 g des cremigen Gemisches werden ohne weiteres Rühren in ein auf 130 °C aufgeheiztes, senkrecht stehendes Plattenwerkzeug (Formteilgröße 20 × 39,4 × 1 cm) von unten innerhalb von ca. 2 Sekunden eingetragen. Nach 5 Minuten wird ein Formteil mit einer Oberfläche von 70 Shore A (bei 25 °C), einer Dichte von 0,75 g/cm$^3$ und einer integralen Dichteverteilung (massive Randzone, zelliger Kern) entnommen. Die Oberfläche des Formteils ist fehlerfrei.

Beispiel 16

100 g eines linearen Polyoxypropylendiols mit 20% endständigen Oxyethylengruppen (OH-Zahl 56, Molekulargewicht 2000) werden mit 0,25 g Diazabicyclononen und 25 g dimerem Diphenylmethan-4,4'-diisocyanat vermischt. Das aus dem lagerstabilen Reaktionsansatz durch Hitzeverfestigung erhaltene Polyurethan zeigt folgende mechanische Eigenschaften (infolge Fehlens eines Kettenverlängerungsmittels liegen bei diesem Ansatz die Elastomereigenschaften auf relativ niedrigem Niveau):

| | |
|---|---|
| Zugfestigkeit (MPa): | 3,0 |
| Bruchdehnung (%): | 120 |
| Weiterreißfestigkeit (N/m): | 20 |
| Elastizität (%): | 64 |
| Härte (Shore A): | 58 |

Das dimere Isocyanat wird wie folgt hergestellt: einer Lösung von 100 g Diphenylmethan-4,4'-diisocyanat in 100 g Toluol und 100 g Petrolether werden 0,25 g Tributylphosphin unter Rühren zugesetzt. Das sich abscheidende Dimere wird noch 2 Stunden weitergerührt, dann abgesaugt und nach Waschen mit Petrolether bei Raumtemperatur im Vakuum unter Feuchtigkeitsausschluß getrocknet. Das Dimere wird in über 95% Ausbeute und praktisch oligemerenfrei erhalten (vergl. EP-A-0 071 899).

Beispiel 17

100 g eines linearen Polyoxypropylendiamins des Molekulargewichts 3400 (Herstellung aus Polyoxypropylendiol mit Ammoniak entsprechend US-A-3 654 370) werden 0,15 g 1,2-Dimethyl-tetrahydropyrimidin und danach 20 g dimeres TDI und 10 g 3,5-Diethyl-2,4-diamino-toluol zugesetzt. Die bei Raumtemperatur lagerstabile Reaktionsmischung besitzt eine Aufdickungstemperatur von 95 °C. Nach einer Verfestigungszeit von 30–60 Minuten bei 130–140 °C erhält man einen hochschmelzenden und hochelastischen Formkörper mit einer Härte von ca. 80 Shore A und guten mechanischen Eigenschaften.

Beispiel 18

100 g eines aromatischen Aminopolyethers auf Basis eines Polyoxypropylenetherdiols (Molgewicht: 2000) und Toluylendiisocyanat (Molverhältnis 1 : 2), hergestellt nach dem Verfahren von DE-A-2 948 419, mit einer Aminzahl von 46,7 und einem Molgewicht von 2350, wurden jeweils mit

a) 0,2 g 1,4,6-Triaza-6-N-butyl-bicyclo-[3,3,0]-oct-4-en
b) 0,2 g 1,5,7-Triaza-7-N-benzyl-bicyclo-[4,4,0]-dec-5-en
c) 1,5,7-Triaza-7-N-cyclohexyl-bicyclo-[4,4,0]-dec-5-en

und anschließend mit 18,0 g TDIH in Form eines feingemahlenen Pulvers vermischt. Die Reaktionsmischungen sind bei Raumtemperatur unbegrenzt lagerstabil, d. h. es tritt keine Viskositätserhöhung ein. Nach kurzem Entgasen im Vakuum und 30–60 Minuten Erhitzen auf 120 °C erhält man elastische Formkörper mit folgenden mechanischen Eigenschaften:

Tabelle

| | a | b | c |
|---|---|---|---|
| Shore Härte A | 93 | 88 | 90 |
| Zugfestigkeit [MPa] | 12,5 | 13,8 | 15,7 |
| Reißdehnung [%] | 205 | 320 | 480 |
| Weiterreißfestigkeit [N/cm] | 23,5 | 21,5 | 25,7 |
| Elastizität [%] | 43 | 40 | 40 |

**Patentansprüche**

1. Verfahren zur Herstellung von feinteiligen, durch eine Oberflächenhülle in ihrer Reaktivität retardierten festen Polyisocyanaten, dadurch gekennzeichnet, daß man ein festes, feinteiliges Polyisocyanat mit einem Schmelzpunkt oberhalb 40 °C und einer Teilchengröße von 0,5 bis 200 µm mit einer offenkettigen, monocyclischen oder bicyclischen Verbindung, welche mindestens eine Amidin- und/oder Guanidingruppierung enthält und welche keine gegenüber Isocyanatgruppen bei Raumtemperatur reaktiven H-Atome besitzt, in einer Menge von 0,001 bis 0,25 Äquivalent Amidin- und Guanidingruppen pro Äquivalent NCO in einem flüssigen Medium, ausgewählt aus Mono- und/oder Polyolen und/oder aromatischen Polyaminen und/oder Weichmachern und/oder Wasser und/oder unpolaren oder wenig polaren Lösungsmitteln, wobei das flüssige Medium kein Lösungsmittel für das feste Polyisocyanat ist, bei Temperaturen unterhalb des Schmelzpunktes des Polyisocyanats umsetzt, gegebenenfalls das so mit einer Oberflächenhülle versehene Polyisocyanat aus den als flüssiges Medium verwendeten Monoalkoholen, Weichmachern, Wasser und/oder Lösungsmitteln isoliert und gegebenenfalls nachträglich in Polyolen und/oder Polyaminen suspendiert.

2. Verfahren nach Anspruch 1, dadurch gekennzeichnet, daß man als flüssiges Medium aromatische Polyamine und/oder Polyole mit Molekulargewichten von 400 bis 6000, gegebenenfalls unter Zusatz von aromatischen Polyaminen und/oder Polyolen mit Molekulargewichten von 60 bis 399 verwendet, wobei man vorzugsweise das flüssige Medium relativ zum Polyisocyanat in solchen Mengen einsetzt, wie dies der Rezeptur eines Einkomponenten-PU-Reaktivsystems entspricht.

3. Verfahren nach Anspruch 1 oder 2, dadurch gekennzeichnet, daß man als flüssiges Medium aromatische Polyamine mit Molekulargewichten von 400 bis 6000, gegebenenfalls unter Zusatz von Weichmachern oder Wasser, sowie gegebenenfalls unpolaren oder wenig polaren Lösungsmitteln, verwendet.

4. Verfahren nach Ansprüchen 1 bis 3, dadurch gekennzeichnet, daß man offenkettige oder cyclische Amidine der Formel (III) einsetzt

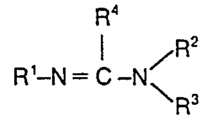
(III),

in der

$R^1$ und $R^4$ H, einen geradkettigen oder verzweigten aliphatischen Kohlenwasserstoffrest mit 1 bis 18 C-Atomen, einen cycloaliphatischen Kohlenwasserstoffrest mit 5 bis 7 Ring-C-Atomen, einen

araliphatischen oder einen aromatischen Rest, welche Reste gegebenenfalls inerte Substituenten aufweisen und/oder durch Struktureinheiten –O–, –S– oder –N-Alkyl bzw. –N-Cycloalkyl- unterbrochen sind, bedeuten,

$R^2$ und $R^3$ gleich oder verschieden sind und Alkylen-N-(di-(cyclo)-alkyl)-Reste darstellen oder die Bedeutung von $R^1$, ausgenommen H, haben, wobei jeweils 2 der Reste $R^1$ bis $R^4$ miteinander zu einem Ring verbunden sein können.

5. Verfahren nach Ansprüchen 1 bis 4, dadurch gekennzeichnet, daß man cyclische Amidine der allgemeinen Formeln (IV) bis (VII) einsetzt, wobei in der Formel (IV)

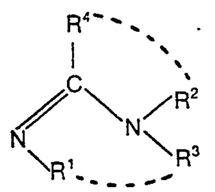

(IV)

die Reste $R^1$ und $R^3$ zusammen und/oder die Reste $R^2$ und $R^4$ zusammen einen, gegebenenfalls Heteroatome enthaltenden, gegebenenfalls verzweigten Alkylenrest mit 2 bis 5 C-Atomen in der Alkylenkette darstellen;

in der Formel (V)

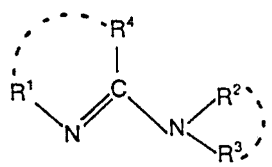

(V)

die Reste $R^1$ und $R^4$ zusammen und/oder die Reste $R^2$ und $R^3$ zusammen einen, gegebenenfalls Heteroatome enthaltenden, gegebenenfalls verzweigten Alkylenrest mit 2 bis 5 C-Atomen in der Alkylenkette darstellen;

in der Formel (VI)

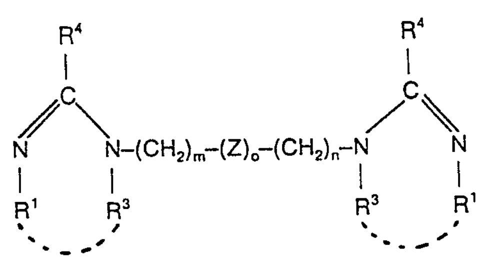

(VI)

Z eine N-($C_1$–$C_{18}$)-Alkylgruppe oder einen geradkettigen oder verzweigten $C_2$- bis $C_{14}$-Alkylenrest, der gegebenenfalls in der Kette durch –O– unterbrochen sein kann, einen Cycloalkylenrest mit 5 bis 8 Ringgliedern oder einen Dicyclohexylrest mit 5 bis 8 Ringgliedern oder einen Dicyclohexyl-($C_1$- bis $C_4$-alkan)-Rest darstellt und

m und n gleiche oder verschiedene ganze Zahlen von 2 bis 10 sind, und

o Null oder 1

bedeutet;

und in der Formel (VII)

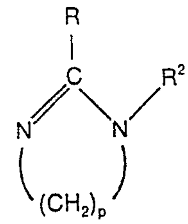

(VII)

p 2, 3 oder 4 ist,

$R^4$ einen geradkettigen oder verzweigten $C_1$–$C_4$-Alkylrest

und

$R^2$ einen geradkettigen oder verzweigten $C_1$–$C_4$-Alkylrest, $-(CH_2)_p \cdot N \cdot (R^4)_2$ oder $C_5$–$C_7$-Cycloalkylrest darstellt.

6. Verfahren nach Ansprüchen 1 bis 3, dadurch gekennzeichnet, daß man Guanidinreste aufweisende Verbindungen entsprechend der Formel (VIII) verwendet,

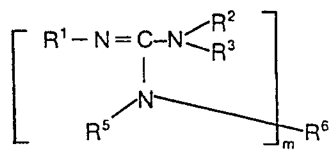

(VIII)

wobei

m = 1 oder 2 ist

$R^1$, $R^2$, $R^3$ für Reste steht, welche dieselbe Bedeutung wie in der Formel (III) von Anspruch 4 haben,

$R^5$ eine Bedeutung wie $R^2$ hat,

$R^6$ entweder für einen einwertigen Rest der für $R^2$ genannten Art oder für einen zweiwertigen Alkylenrest, der gegebenenfalls durch –O–, –N(Alkyl)- oder –N(Cycloalkyl)-Rest unterbrochen sein kann, steht, und wobei jeweils zwei der Reste $R^1$, $R^2$, $R^3$, $R^5$ und $R^6$ miteinander zu cyclischen Guanidinen der nachfolgenden Strukturen verknüpft sein können,

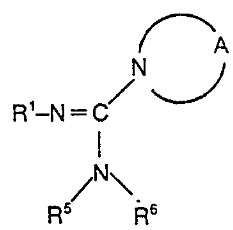

(VIII–a)

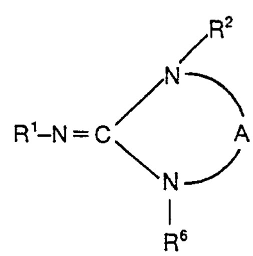

(VIII–b)

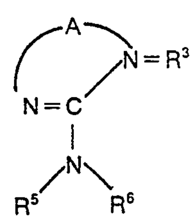

(VIII–c)

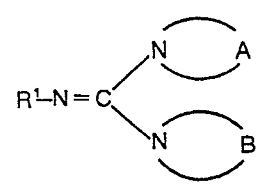

(VIII–d)

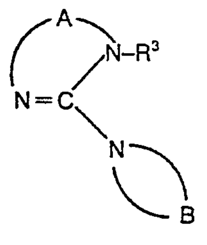

(VIII–e)

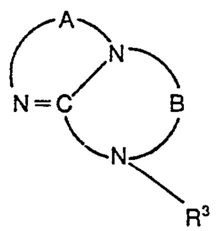

(VIII–f)

in denen die Gruppierungen A und B mindestens zweigliedrige, bivalente, aliphatische, cycloaliphatische, araliphatische oder aromatische Kohlenstoffketten, die gegebenenfalls auch durch Heteroatome (–O–, –S–, –N(Alkyl-) unterbrochen oder mit gegenüber Isocyanaten inerten Substituenten substituiert sein können, bedeuten.

7. Verfahren nach Ansprüchen 1 bis 6, dadurch gekennzeichnet, daß man zur Bildung der Oberflächenhülle, neben Amidinen und/oder Guanidinen als weitere mit den NCO-Gruppen des festen Polyisocyanats reagierende Verbindungen aliphatische Polyamine, Hydrazin, Alkylhydrazine, Polyhydrazid-Verbindungen oder Wasser in solchen molaren Mengen mitverwendet, daß maximal 25% der NCO-Gruppen des festen Polyisocyanats umgesetzt werden.

8. Feste, feinteilige durch eine Oberflächenhülle in ihrer Reaktivität retardierte Polyisocyanate, erhältlich nach den Verfahren gemäß Ansprüchen 1 bis 7, gegebenenfalls suspendiert in Polyolen und/oder aromatischen Polyaminen, mit einem NCO-Restgehalt von mindestens 75% der ursprünglich vorhandenen NCO-Gruppen.

9. Oberflächenmodifizierte Polyisocyanate nach Anspruch 8, dadurch gekennzeichnet, daß sie in aromatischen und/oder aliphatischen Polyaminen mit Molekulargewichten von 400 bis 6000, und gegebenenfalls in aromatischen Polyaminen des Molekulargewichtsbereichs 108 bis 399 und/oder Polyolen des Molekulargewichtsbereiches 62–399, suspendiert sind.

10. Verwendung der Polyisocyanate nach Ansprüchen 8 und 9, insbesondere in Form von lagerstabilen, thermisch härtbaren Einkomponenten-Polyurethan-Reaktivsystemen, als Reaktionskomponente zur Herstellung von Polyurethanen.

## Claims

1. A process for the production of finely divided, solid polyisocyanates retarded in their reactivity by a surface shell, characterized in that a solid, finely divided polyisocyanate having a melting point above 40 °C and a particle size of 0.5 to 200 µm is reacted with an open-chain monocyclic or bicyclic compound, which contains at least one amidine and guanidine group, but does not have any hydrogen atoms reactive to isocyanate groups at room temperature, in a quantity of 0.001 to 0.25 equivalent amidine and guanidine groups per equivalent NCO in a liquid medium selected from mono- and/or polyols and/or aromatic polyamines and/or plasticizers and/or water and/or apolar or weakly polar solvents, the liquid medium not being a solvent for the solid polyisocyanate, at temperatures below the melting point of the polyisocyanate and the polyisocyanate thus provided with a surface shell is optionally isolated from the monoalcohols, plasticizers, water and/or solvents used as liquid medium and, optionally, is subsequently suspended in polyols and/or polyamines.

2. A process as claimed in claim 1, characterized in that the liquid medium is an aromatic polyamine and/or polyol having a molecular weight of 400 to 6000, to which an aromatic polyamine and/or polyol having a molecular weight of 60 to 399 has optionally been added, the liquid medium preferably being used in such quantities in relation to the polyisocyanate as correspond to the formulation of a single-component reactive PU system.

3. A process als claimed in claim 1 or 2, characterized in that the liquid medium used is an aromatic polyamine having a molecular weight of 400 to 6000, to which plasticizers or water have optionally been added, and, optionally, an apolar or weakly polar solvent.

4. A process as claimed in claims 1 to 3, characterized in that open-chain or cyclic amidines corresponding to formula (III)

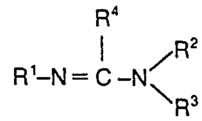

(III)

in which

$R^1$ and $R^4$ represent H, a linear or branched, aliphatic $C_1$–$C_{18}$ hydrocarbon radical, a cycloaliphatic hydrocarbon radical containing 5 to 7 ring carbon atoms, an araliphatic or an aromatic radical, which radicals may optionally contain inert substituents and/or may be interrupted by structural units –O–, –S– or –N-alkyl or –N-cycloalkyl,

$R^2$ and $R^3$ may be the same or different and represent alkylene N-(di-(cyclo)-alkyl)-radicals or have the same meaning as $R^1$, except for H,

two of the substituents $R^1$ to $R^4$ optionally being attached to one another to form a ring,

are used.

5. A process as claimed in claims 1 to 4, characterized in that cyclic amidines corresponding to general formulae (IV) to (VII) are used; in formula (IV)

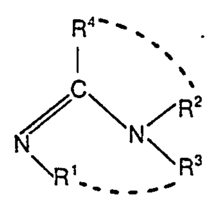

(IV)

the substituents $R^1$ and $R^3$ together and/or the substituents $R^2$ and $R^4$ together represent an alkylene radical optionally containing heteroatoms with 2 to 5 carbon atoms in the alkylene chain;

in formula (V)

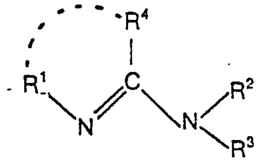

(V)

the substituents $R^1$ and $R^4$ together and/or the substituents $R^2$ and $R^3$ together represent an alkylene radical optionally containing heteroatoms with 2 to 5 carbon atoms in the alkylene chain;

in formula (VI)

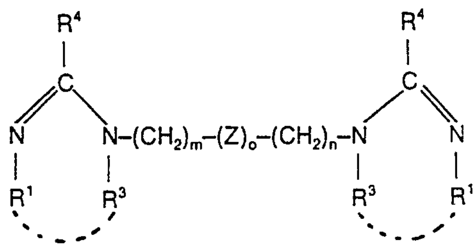

(VI)

Z is an N-($C_1$–$C_{18}$)-alkyl group or a linear or branched $C_2$–$C_{14}$ alkylene radical which may optionally be interrupted in the chain by –O–, a cycloalkylene radical containing 5 to 8 ring members or a dicyclohexyl radical containing 5 to 8 ring members or a dicyclohexyl-($C_1$–$C_4$-alkane) radical and

m and n may be the same or different and represent integers of 2 to 10 and

o = 0 or 1;

and in formula (VII)

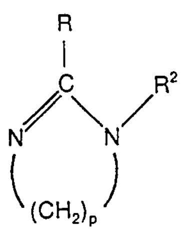

(VII)

p = 2, 3, or 4,

$R^4$ is a linear or branched $C_1$–$C_4$ alkyl radical and

$R^2$ is a linear or branched $C_1$–$C_4$ alkyl radical, $-(CH_2)_p \cdot N \cdot (R^4)_2$ or a $C_5$–$C_7$ cycloalkyl radical.

6. A process as claimed in claims 1 to 3, characterized in that compounds containing guanidine groups corresponding to formula (VIII) below are used:

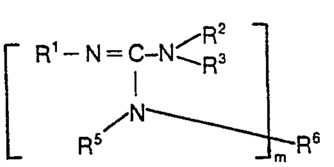

(VIII)

in which

m = 1 or 2,

$R^1$, $R^2$ and $R^3$ represent substituents which have the same meaning as in formula (III) of claim 4,

$R^5$ has the same meaning as $R^2$,

$R^6$ is either a monofunctional substituent of the type mentioned for $R^2$ or a difunctional alkylene radical which may optionally be interrupted by –O–, –N(alkyl)- or –N(cycloalkyl)- radicals,

and two of the substituents $R^1$, $R^2$, $R^3$, $R^5$ and $R^6$ may be attached to one another to form cyclic guanidines having the following structures:

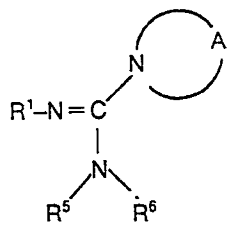

(VIII–a)

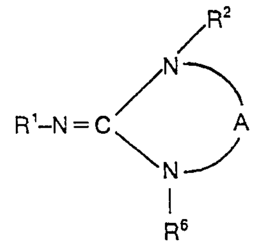

(VIII–b)

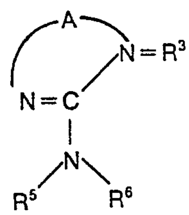

(VIII–c)

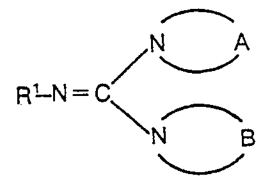

(VIII–d)

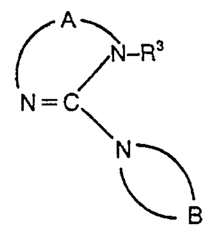

(VIII–e)

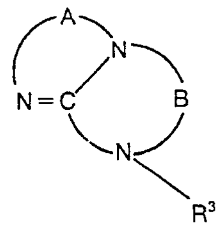

(VIII–f)

in which the groups A and B are at least 2-membered, divalent, aliphatic, cycloaliphatic, araliphatic or aromatic carbon chains which may even be interrupted by heteroatoms (–O–, –S–, –N(alkyl)) or substituted by substituents inert to isocyanates.

7. A process as claimed in claims 1 to 6, characterized in that, in addition to amidines and/or guanidines, aliphatic polyamines, hydrazine, alkyl hydrazines, polyhydrazide compounds or water are used as further compounds reactive to the NCO groups of the solid polyisocyanate for forming the surface shell in such molar quantities that at most 25% of the NCO groups of the solid polyisocyanate are reacted.

8. Solid, finely divided polyisocyanates retarded in their reactivity by a surface shell obtainable by the process claimed in claims 1 to 7, optionally suspended in polyols and/or aromatic polyamines and having a residual NCO content of at least 75% of the NCO groups originally present.

9. Surface-modified polyisocyanates as claimed in claim 8, characterized in that they are suspended in aromatic and/or aliphatic polyamines having molecular weights of from 400 to 6000 and, optionally, in aromatic polyamines having a molecular

weight in the range from 108 to 399 and/or polyols having a molecular weight in the range from 62 to 399.

10. The use of the polyisocyanates claimed in claims 8 and 9, particularly in the form of storable, thermosetting one-component reactive polyurethane systems, as reaction component for the production of polyurethanes.

**Revendications**

1. Procédé de préparation de polyisocyanates solides en fines particules, dont la réactivité est retardée par une enveloppe superficielle, caractérisé en ce que l'on fait réagir un polyisocyanate solide en fines particules, ayant un point de fusion supérieur à 40 °C et une dimension de particule de 0,5 à 200 µm, avec un composé acyclique, monocyclique ou bicyclique contenant au moins un groupement amidine et/ou guanidine et ne portant pas d'atomes d'hydrogène réactifs à température ambiante avec les groupes isocyanate, en quantité de 0,001 à 0,25 équivalent de groupes amidine et guanidine par équivalent de groupes NCO, dans un milieu liquide choisi parmi les mono- et/ou polyols et/ou les polyamines aromatiques et/ou les plastifiants et/ou l'eau et/ou les solvants non polaires ou peu polaires, le milieu liquide n'étant pas solvant du polyisocyanate solide, à des températures inférieures au point de fusion du polyisocyanate, on isole le cas échéant le polyisocyanate ainsi pourvu d'une enveloppe superficielle des monoalcools, plastifiants, eau et/ou solvants utilisés en tant que milieu liquide et le cas échéant on le met ensuite en suspension dans des polyols et/ou des polyamines.

2. Procédé selon la revendication 1, caractérisé en ce que l'on utilise en tant que milieux liquides des polyamines aromatiques et/ou des polyols de poids moléculaire 400 à 6000, éventuellement avec adjonction de polyamines aromatiques et/ou de polyols de poids moléculaire 60 à 399, en utilisant de préférence le milieu liquide, par rapport au polyisocyanate, en quantité correspondant à celle de la formule d'un système réactif en polyuréthanne à un composant.

3. Procédé selon la revendication 1 ou 2, caractérisé en ce que l'on utilise en tant que milieux liquides des polyamines aromatiques de poids moléculaire 400 à 6000, avec adjonction éventuelle de plastifiants ou d'eau et le cas échéant de solvants non polaires ou peu polaires.

4. Procédé selon les revendications 1 à 3, caractérisé en ce que l'on utilise des amidines acycliques ou cycliques de formule III

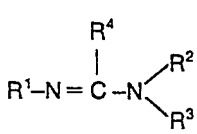

(III),

dans laquelle

$R^1$ et $R^4$ représentent chacun H, un radical hydrocarboné aliphatique à chaîne droite ou ramifiée en $C_1$–$C_{18}$, un radical hydrocarboné cycloaliphatique contenant 5 à 7 atomes de carbone cycliques, un radical araliphatique ou un radical aromatique, ces radicaux portant éventuellement des substituants inertes et/ou étant interrompus par des motifs de structure –O–, –S– ou –N-alkyle ou –N-cycloalkyle,

$R^2$ et $R^3$, ayant des significations identiques ou différentes, représentent chacun un groupe alkylène-N-[di-(cyclo)-alkyle]- ou ont les significations de $R^1$ à l'exception de l'hydrogène, les symboles $R^1$ à $R^4$ pouvant également être reliés entre eux par paires avec formation d'un cycle.

5. Procédé selon les revendications 1 à 4, caractérisé en ce que l'on utilise des amidines cycliques de formules générales IV à VII

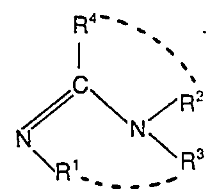

(IV)

dans laquelle les groupes $R^1$ et $R^3$ et/ou les groupes $R^2$ et $R^4$ forment ensemble un groupe alkylène éventuellement ramifié, contenant éventuellement des hétéro-atomes, avec 2 à 5 atomes de carbone dans la chaîne alkylène;

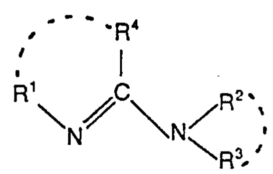

(V)

dans laquelle les groupes $R^1$ et $R^4$ et/ou les groupes $R^2$ et $R^3$ forment ensemble un groupe alkylène éventuellement ramifié contenant éventuellement des hétéro-atomes avec 2 à 5 atomes de carbone dans la chaîne alkylène;

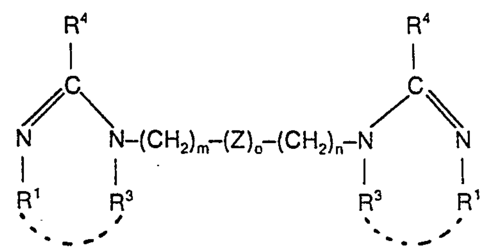

(VI)

dans laquelle

Z représente un groupe N-(alkyle en $C_1$–$C_{18}$)- ou un groupe alkylène à chaîne droite ou ramifiée en $C_2$–$C_{14}$, éventuellement interrompu dans la chaîne par –O–, un groupe cycloalkylène contenant 5 à 8 chaînons ou un groupe dicyclohexyle contenant 5 à 8 chaînons ou un groupe dicyclohexyl-(alcane en $C_1$–$C_4$)- et

m et n sont des nombres entiers identiques ou différents allant de 2 à 10, et
o est égal à 0 ou 1;

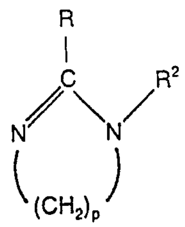

(VII)

dans laquelle
p est égal à 2, 3 ou 4,
$R^4$ représente un groupe alkyle en $C_1$–$C_4$ à chaîne droite ou ramifiée et
$R^2$ représente un groupe alkyle à chaîne droite ou ramifiée en $C_1$–$C_4$,
un groupe $-(CH_2)_p \cdot N \cdot (R^4)_2$ ou cycloalkyle en $C_5$–$C_7$.

6. Procédé selon les revendications 1 à 3, caractérisé en ce que l'on utilise des composés contenant des radicaux de guanidine répondant à la formule VIII

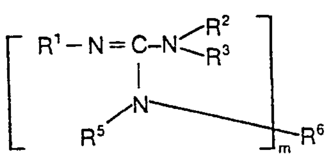

(VIII)

dans laquelle
m est égal à 1 ou 2,
$R^1$, $R^2$, $R^3$ représentent des groupes qui ont les significations indiquées en référence à la formule III dans la revendication 4,
$R^5$ a les significations de $R^2$,
$R^6$ représente un groupe monovalent du type mentionné pour $R^2$ ou un groupe alkylène divalent éventuellement interrompu par –O–, –N(alkyle)- ou –N(cycloalkyle)-,
les groupes $R^1$, $R^2$, $R^3$, $R^5$ et $R^6$ pouvant être reliés entre eux par paires avec formation de guanidines cycliques de structures ci-après

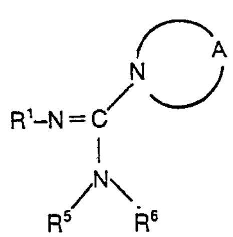

(VIII–a)

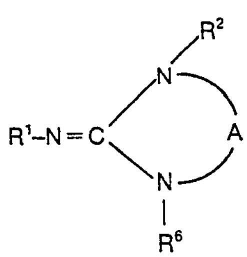

(VIII–b)

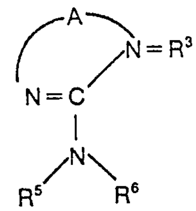

(VIII–c)

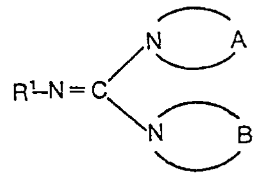

(VIII–d)

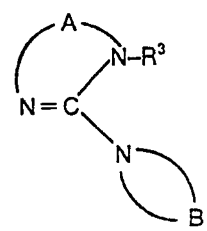

(VIII–e)

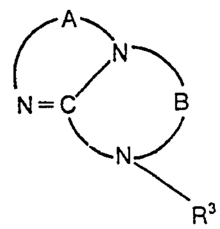

(VIII–f)

dans lesquelles les groupements A et B sont des chaînes carbonées aliphatiques, cycloaliphatiques, araliphatiques ou aromatiques à au moins deux chaînons, bivalentes, éventuellement interrompues par des hétéro-atomes (–O–, –S–, –N(alkyle)-) ou substituées par des substituants inertes à l'égard des isocyanates.

7. Procédé selon les revendications 1 à 6, caractérisé en ce que, pour la formation de l'enveloppe superficielle, en plus des amidines et/ou des guanidines, on utilise conjointement en tant qu'autres composés réagissant avec les groupes NCO du polyisocyanate solide, des polyamines aliphatiques, l'hydrazine, des alkylhydrazines, des polyhydrazides ou l'eau en quantité molaire telle que 25% au maximum des groupes NCO du polyisocyanate solide réagissent.

8. Polyisocyanates solides en fines particules à réactivité retardée par une enveloppe superficielle, obtenus par les procédés des revendications 1 à 7, éventuellement en suspension dans des polyols et/ou des polyamines aromatiques, à une teneur résiduelle en groupes NCO représentant au moins 75% des groupes NCO présents à l'origine.

9. Polyisocyanates modifiés en surface selon la revendication 8, caractérisés en ce qu'ils sont en suspension dans des polyamines aromatiques et/ou aliphatiques de poids moléculaire 400 à 6000, et le cas échéant dans des polyamines aromatiques de poids moléculaire 108 à 399 et/ou des polyols de poids moléculaire 62 à 399.

10. Utilisation des polyisocyanates selon les revendications 8 et 9, en particulier sous la forme de systèmes réactifs en polyuréthannes à un composant stables à la conservation mais durcissables à la chaleur, en tant que composants de réaction dans la préparation de polyuréthannes.